# EUROPEAN PATENT SPECIFICATION

(11) **EP 4 136 274 B1**
(45) Date of publication and mention of the grant of the patent: **14.10.2026**
(21) Application number: 21719887.8
(22) Date of filing: 15.04.2021
(51) Int. Cl.: C25B 1/04, C25B 11/031, C25B 11/073, C25B 11/077, C25B 11/055, C25B 9/23

(54) **METHOD OF PREPARATION OF ELECTRODE FOR ELECTROCATALYSIS**
VERFAHREN ZUR HERSTELLUNG VON ELEKTRODE FÜR ELEKLTROKATALYSIS
MÉTHODE DE PRÉPARATION D'UNE ÉLECTRODE POUR ELECTROCATALYSE

(30) Priority: 15.04.2020 EP 20382294
(43) Date of publication of application: 22.02.2023
(73) Proprietor: Fundació Institut Català d'Investigació Química (ICIQ), 43007 Tarragona (ES); Institució Catalana De Recerca I Estudis Avançats (ICREA), 08010 Barcelona (ES)
(72) Inventor: LLORET-FILLOL, Julio, 46740 CARCAIXENT (ES); BUCCI, Alberto, 63100 ASCOLI PICENO (IT)
(74) Representative: ABG Intellectual Property Law, S.L.
(86) International application number: PCT/EP2021/059779
(87) International publication number: WO 2021/209547

(56) References cited:
- WO-A1-2018/169882
- WO-A2-2015/087168
- CN-A- 107 910 511
- CN-A- 108 671 948
- US-A1- 2020 047 162
- DEY SHOROSHI ET AL: "Synthesis and characterization of Nanocrystalline Ba0.6Sr0.4Co0.8Fe0.2O3 for application as an efficient anode in solid oxide electrolyser cell", INTERNATIONAL JOURNAL OF HYDROGEN ENERGY, ELSEVIER LTD, AMSTERDAM, NL, vol. 45, no. 7, 16 January 2020 (2020-01-16), pages 3995 - 4007, XP086010628, ISSN: 0360-3199, [retrieved on 20200116], DOI: 10.1016/J.IJHYDENE.2019.12.083
- WEI WEN ET AL: "Rapid one-step synthesis and electrochemical performance of NiO/Ni with tunable macroporous architectures", NANO ENERGY, vol. 2, no. 6, 1 November 2013 (2013-11-01), pages 1383 - 1390, XP055732587, ISSN: 2211-2855, DOI: 10.1016/j.nanoen.2013.07.002
- SANKANNAVAR RAVI ET AL: "High oxygen evolution reaction activity on lithiated nickel oxides - Activity descriptors", ELECTROCHIMICA ACTA, ELSEVIER, AMSTERDAM, NL, vol. 318, 19 June 2019 (2019-06-19), pages 809 - 819, XP085760023, ISSN: 0013-4686, [retrieved on 20190619], DOI: 10.1016/J.ELECTACTA.2019.06.089

## Description

The present invention relates to a method for the preparation of an electrode suitable for electrocatalysis, in particular an anode for alkaline water hydrolysis. The method of the invention is defined by the wording of claim 1.

### BACKGROUND ART

Electrodes comprising electrocatalytically active materials are commonly used in industry in several types of devices and apparatus, such as batteries, fuel cells or electrolysers. Known active materials for such devices typically comprise, among others, metals (0), metal alloys, metal oxides, metal sulphides or metal phosphides, all of them eventually doped with other elements in order to increase their catalytic activity. Electrodes containing electrocatalysts as active materials are commonly used in industrial methods such as the synthesis of adiponitrile, the electrochemical fluorination (Simmons method), bleaching of waxes, regeneration of chromic acids, fuel cells, wastewater treatment (by anodic oxidation or cathodic reduction), chloralkali process, carbon dioxide valorisation, organic electrosynthesis or alkaline, PEM and AEM water electrolysis. It is however known in the art that the catalytic activity of the electrode material depends on a combination of numerous factors, such as material composition, large specific surface area, the distance between atoms, pore sizes and distribution of active sites. These factors are commonly controlled through the preparation method of the electrode comprising the active material by carefully selecting the material composition, its precursors and the preparation process.

Different methods are known in the art for the preparation of electrodes comprising electrocatalytically active materials. Such methods include (i) the step of preparing in a previous step the electrocatalytically active material, followed by either deposition of the pre-formed active material on the electrode carrier, eventually formulated as an ink, by coating, casting, printing, vapour deposition, impregnation, spraying or doctor blade techniques, or compression or compaction of the pre-formed active material, (ii) formation of the active material on the surface of the electrode by electrochemical means (e.g. electrodeposition), (iii) thermal treatment such as sintering or thermal decomposition of material precursors and pyrolysis. Such methods either require specific equipment for the preparation of the electrode (e.g. sublimation devices, printers, compressing means) or high temperatures of annealing/calcination (typically above 500 °C) or the use of a binder to fix the active material to the surface of the electrode and/or a conductive material to increase the conductivity of the active material or they are specific for a certain type of application or electrocatalytic material.

Different methods are also known in the art for the preparation of active materials comprising metal oxides. Such methods include, for instance, coprecipitation of metal hydroxides in basic media followed by ageing and calcination step, or the calcination of metal salt precursors. Metal oxides may also be prepared via the so-called combustion synthesis method wherein a salt of a metal with an oxidizing anion, typically nitrate, is placed in a solution comprising a reducing organic compound, also called fuel, and the resulted solution is heated at a temperature sufficiently high to generate spontaneous combustion of the mixture. The exothermic combustion reaction generates such an amount of energy allowing for the spontaneous formation of metal oxide species. Such a method was extensively reviewed by Varma et al. (Chem. Rev. 2016, 116, 14493-14586). When used as electrocatalytically active materials in electrodes, metal oxides prepared by the combustion synthesis are typically supported on the electrode carrier material using a binder material, such as polyvinylidene fluoride, polytetrafluoroethylene or Nafion^{®}, as described, for instance, in the work by Wen and co-workers (Nano Energy (2013) 2, 1383-1390).

Following a similar approach, international patent application WO2015087168 describes a method based on the solution combustion synthesis for the preparation of metal oxide catalysts comprising vanadium for the oxygen evolution reaction, consisting in the oxidation of water to oxygen (OER). The OER is commonly used in industry for the generation of hydrogen by water hydrolysis. The metal oxide species obtained via the combustion synthesis method were supported on the electrode carrier with the help of a binder. This resulted in electrodes exhibiting an OER activity such that an anodic current density of 10 mA/cm² was obtained with overpotential values above 300 mV, the overpotential being defined as the difference between the applied potential and the redox potential of water electrolysis (1.23 V). This application also discloses a method whereby a precursor mixture comprising a nitrate salt of cobalt and vanadium is transferred to an electrode support that is then heated such that the precursor mixture self-ignites on the support, thereby producing a self-supported electrode having cobalt vanadium in non-oxidized forms as electrocatalytically active material.

Han and co-workers have reported some catalysts based on mixed oxides of cobalt and manganese prepared by gel-combustion synthesis from aqueous solutions of nitrate salts of cobalt and/or manganese, citric acid as fuel and ethylene glycol in equimolar amounts (Catalysts 2019, 9, 564). The heating of the solution is made in two heating steps: (i) at 80-130 °C to obtain a sol-gel by evaporation of water and (ii) at 300 °C to allow for the self-ignition of the gel. The resulting mixed oxides mixture was then dissolved in an aqueous solution of Nafion^{®} 117 (binder), and the resulting solution was drop-casted on the electrode substrate. The reported overpotential value for an anodic current density of 10 mA/cm² was above 400 mV.

Sankannavar et al. also reported a similar approach for the synthesis of electrodes for water oxidation wherein the active material, i.e. lithiated nickel oxide, is prepared via solution-combustion synthesis using citric acid as a fuel (Electrochimica Acta 2019, 318, 809-819). The powder obtained after combustion was further calcined and was then formulated as an ink by mixing with Vulcan carbon (conductive element) and Nafion^{®} (binder) in water. The resulting ink was then drop-casted on the electrode carrier (glassy carbon electrode). The reported overpotential value for an anodic current density of 10 mA per cm² was above 400 mV.

Patent application CN 107 910 511 A discloses a method of preparation of a layered lithium-rich cathode material of formula Li[Li_{x/3}Mn_{2x/3}M₁₋ₓ]O₂, where 0〈x≤1 and M is at least one of Ni, Co, Mn, Al, V, Ti, Cr by solution combustion synthesis. This application further discloses the attachment of the produced electrode material on aluminium foil via the preparation of an ink comprising a binder (PVDF).

Dey, S. et al. disclose in Int. J. Hydrogen Energy 2020, 45, 7, 3995-4007 the preparation of Ba_{0.6}Sr_{0.4}Co_{0.8}Fe_{0.2}O₃ (BSCF-6482) by solution combustion synthesis for use as active material in the anode of a SOEC. The preparation of an electrode for this material is disclosed as requiring the preparation of a paste of the active material with an organic vehicle of ethyl cellulose and terpineol. The paste is deposited on a support that is a gadolinium-doped cerium oxide to prepare an electrode. The coated support is then further calcined at 1050 °C, which allows removing the organic vehicle.

Mixed oxides of nickel and cobalt were prepared by Ashok and co-workers using the solution-combustion synthesis starting from metal nitrate salts and glycine as a fuel (International journal of hydrogen energy 44 (2019) 16603-16614). The catalyst was further mixed with carbon black as conductive agent and the resulting solid was deposited on the electrode substrate (glassy carbon disk). A solution of Nafion^{®} as binding agent was added. The reported overpotential value for an anodic current density of 10 mA per cm² was about 400 mV.

Patent application US2020/0047162 discloses the preparation of an electrode comprising mixed oxides of zinc and cobalt as electrocatalytically active materials. The disclosed electrodes were prepared by coating a formulated ink comprising a binder and an electrocatalytically active material - zinc cobalt oxide - on the surface of an electrode support. The zinc cobalt oxide active material is prepared via the solution combustion synthesis using a precursor mixture consisting of an aqueous solution of nitrate salts of cobalt and zinc and glycine as fuel component that is heated, thereby producing a powder mixed oxides.

In addition, several methods are known in the art allowing for the preparation of self-supported metal oxide catalysts for water electrolysis wherein the active material is freestanding on the surface of the electrode carrier with no need for a binding agent. Such methods have been reviewed by Zun and co-workers (Adv. Mater. 2019, 1806326) and include hydro/solvothermal methods, chemical or physical vapour deposition, electrodeposition, vacuum filtration, freeze-drying, alloying, and dealloying. The authors are, however, silent about the use of the combustion synthesis method in the preparation of self-supported electrodes.

From what is known in the art, it derives that there is still a need for providing an improved method for the general preparation of electrodes suitable for electrocatalysis and improved electrodes suitable for electrocatalysis comprising optionally doped metal oxides or a mixture thereof with one or more of metal sulphides, metal sulphites, metal sulphates, metal phosphates, metal phosphites and metal phosphides as active materials.

### SUMMARY OF THE INVENTION

The inventors have developed a method for the preparation of an electrode for electrocatalysis as defined in claim 1.

Unlike the methods described in the state of the art, the developed method allows growing and attaching an electrocatalytically active material onto the electrode support, collector or carrier, at low temperatures and with no need for a binder, such as Nafion^{®}, to be used. This has the advantages of (i) optimizing the electrical contact between the electrode and the active sites of the active material, (ii) avoiding burying active sites and (iii) making mass transport at the active sites easier, which results in more efficient catalysis at the electrode. The method of the invention also allows for preparing a thin layer of the active material on the surface of an electron conductive material. When the electrocatalytically active material is poorly electron conductive, this is for example the case when the electrocatalytically active material is a metal oxide, the formation of a thin layer of material on the surface of an electron conductive material of the electrode provides intimate contact between an electron conductive portion of the electrode and a large portion of the active material, which results in enhanced electrocatalytic efficiency, since electrons are easily transported from the electron conductive material to the active sites of the electrocatalytically active material. This advantageously and surprisingly results in potentially more active, efficient and stable electrodes. In addition, the method of the invention is easy to implement and requires simple manufacturing equipment. As an additional advantage, the method of the invention requires a low input of energy as the formation of the electrocatalytically active material is promoted on or within the electrode carrier by the highly exothermal and spontaneous combustion method. Otherwise, the formation of an electrocatalytically active material usually requires a calcination step carried out at elevated temperatures of calcination (generally above 500 °C). Unlike other methods described in the art, and in combination with the advantages mentioned above, the method of the invention further allows preparing an electrode with control over the parameters determining the morphology and performance of the active material.
Thus, in in claim 1 the invention relates to a method for preparing an electrode suitable for electrocatalysis comprising an electrocatalytically active material consisting essentially of optionally doped metal oxides or a mixture thereof with one or more of metal sulphides, metal sulphites, metal sulphates, metal phosphates, metal phosphites and metal phosphides, said method comprising the steps of:
(a) providing a carrier suitable for an electrode, said carrier comprising an electron conductive material selected from the group consisting of nickel mesh, nickel foam and nickel felt;
(b) providing a precursor mixture comprising at least (i) a source of a nitrate salt of a metal M and (ii) a fuel component suitable for the solution-combustion synthesis, wherein M is selected from the group consisting of cobalt and nickel and said fuel component is selected from the group consisting of urea, glycine, citric acid, acetylacetone and ethylene glycol;
(c) transferring to the electron conductive material of the carrier of step (a) the precursor mixture of step (b) to produce an electrode precursor;
(d) heating the electrode precursor obtained in step (c) at a temperature sufficiently high to cause the transferred precursor mixture to self-ignite;

wherein the carrier of step (a) is such that the electron conductive material is stable at the temperature of step (d); the molar ratio of fuel component to nitrate anion in the precursor mixture of step (b) is such that it allows essentially for the formation of the electrocatalytically active material during the combustion step of step (d); and wherein when the electrocatalytically active material of the electrode comprises one or more of metal sulphides, metal sulphites and metal sulphates, the precursor mixture of step (b) further comprises a sulphur source and/or the fuel component of the precursor mixture comprises a sulphur atom in its molecular formula;
when the electrocatalytically active material of the electrode comprises one or more of metal phosphates, metal phosphites and metal phosphides, the precursor mixture of step (b) further comprises a phosphorus source.

In claim 9 the invention relates to an electrode comprising a carrier and an electrocatalytically active material consisting essentially of optionally doped metal oxides or a mixture thereof with one or more of metal sulphides, metal sulphites, metal sulphates, metal phosphates, metal phosphites and metal phosphides obtained by the method of claims 1-8 wherein the electrocatalytically active material is attached onto the electrode carrier with no need for a binder. In particular, inventors have found that the electrode prepared according to this method is useful in electrocatalytic oxidation methods, such as water oxidation.

In claim 10 the invention relates to a device, such as a fuel cell, a battery or an electrolyser, which comprises one or more electrodes according to claim 9.

In claim 11 the invention relates to the use of the electrode of claim 9 in electrocatalytic oxidation methods. In particular, and more particularly when the active material comprises nickel(II) oxide, inventors have found that the electrode of claim 9 is particularly efficient as an anode in alkaline water electrolysis. Claim 9 of the invention may thus relate to a water electrolyser comprising an electrode comprising nickel(ll) oxide and prepared according to the method of claims 1-8 where the active material is nickel oxide, and M is Ni. In certain embodiments, inventors have unexpectedly found that the anodic oxidation of water requires lower energy than other water oxidation methods promoted by nickel(ll) oxides described in the art, resulting in a more efficient water oxidation method based on a readily available and abundant active metal catalyst. While alkaline electrolysis typically requires high pH, the nickel oxide based catalyst of the invention is efficient in alkaline water oxidation even at low pH values (e.g. 13), if compared with similar catalysts described in the state of the art, which advantageously results in a greener method, since a significantly lower amount of hydroxide ions needs to be used to reach a comparable efficiency. Such low pH values are particularly advantageous in Alkaline Electrolyte Membrane electrolysis (AEM).

Without being bound to theory, it is believed that this enhanced catalytic activity is attributed to three main factors related to the preparation method of the catalyst: 1) the transfer in step (c) of the mixture for solution-combustion synthesis to the electron conductive material ensures that high loadings of active material are directly in contact with the electron conductive material of the electrode, which warrants that most of the active material is able to receive or transfer one or more electrons efficiently; 2) the gas evolved during the combustion step (d) yields a porous and foamy active material, which facilitates the diffusion of reactants or reagents and products of the electrocatalytic process at the active sites of the active material; which results in fast mass transport processes and catalytic turnover (i.e. high turnover frequency); 3) the electrical contact between the active material and the electron conductive material is intimate, which minimizes ohmic losses and favours the transfer of electrons to the active sites of the active materials. It is further believed that the use of a fuel component in the precursor mixture also acting as a chelating agent of the metal nitrate salt as defined in claim 1, such as ethylene glycol, in such a way that most metal cations in the mixture are chelated, allows for improved dispersion of metal atoms onto the electron conductive material of the carrier of the electrode, which contributes to the enhanced efficiency of the electrode by avoiding clustering of active sites on the surface of the electrode carrier and providing a higher catalytically active surface.

### BRIEF DESCRIPTION OF THE DRAWINGS

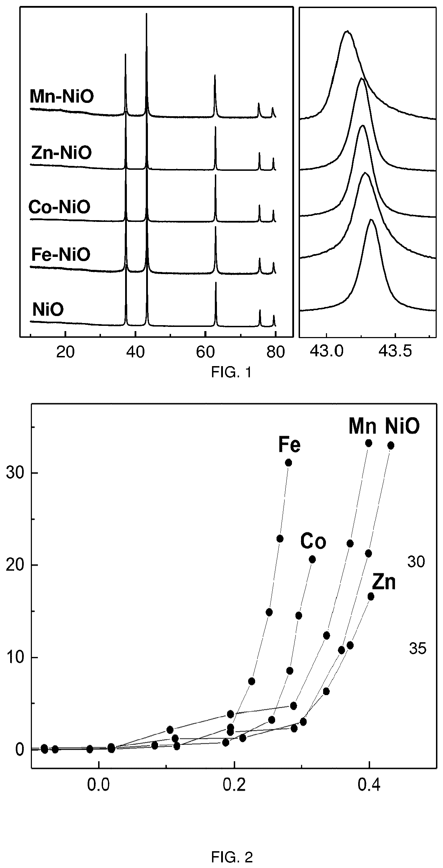

Fig. 1 represents the powder X-ray diffraction of unsupported electrocatalytically active materials prepared according to the procedure described in Comparative Example 1, procedures 1.1 or 1.2, for the following materials: NiO **(NiO),** NiO doped with 10% of Fe(lll) **(Fe·NiO),** NiO doped with 10% of Co(ll) **(Co·NiO),** NiO doped with 10% of Zn(ll) **(Zn·NiO)** or NiO doped with 10% of Mn(II) **(Mn·NiO).**
Fig. 2 represents the evolution trend of current density, expressed in mA per cm² (proportional to the evolution of oxygen) as a function of the overpotential, expressed in V, applied to an electrode used in water oxidation previously prepared according to the method of Example 1 and comprising as electrocatalytically active material: NiO **(NiO),** NiO doped with 10% of Fe(lll) **(Fe),** NiO doped with 10% of Co(II) **(Co),** NiO doped with 10% of Zn(ll) **(Zn)** or NiO doped with 10% of Mn(ll) **(Mn).**

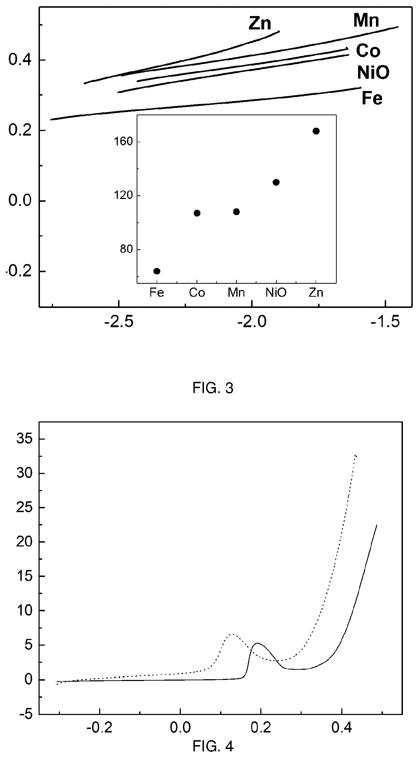

Fig. 3 represents the so-called Tafel plot for the electrodes of Fig. 2 and represents the evolution of the overpotential expressed in V as a function of the current density, expressed with no units in a decimal logarithmic scale. Insert in Figure 3 shows the respective slopes, expressed in mV/dec, for each of the Tafel plots of the electrodes described in Fig. 2.

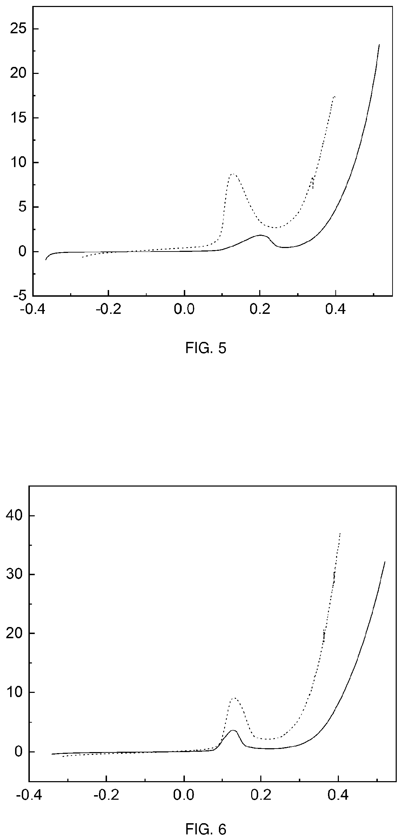

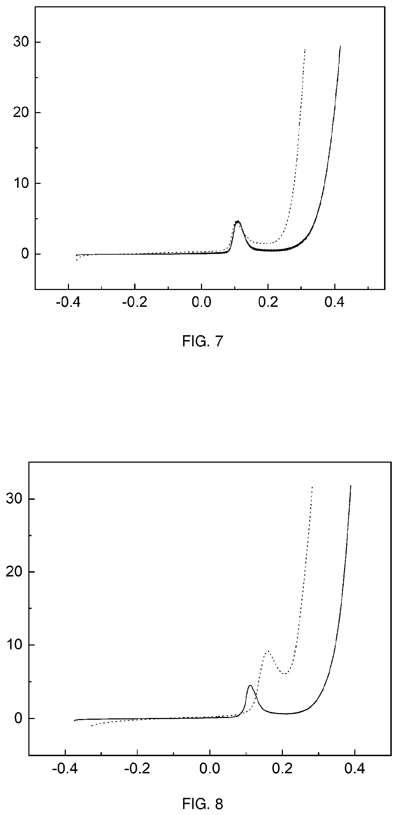

Figures 4 to 8 each represent the comparative polarization curves between an electrode prepared according to the method of Example 1 (dotted line) and an electrode prepared according to the method of comparative Example 1 (plain line) and comprising as electrocatalytically active material: NiO (Fig. 4), NiO doped with 10% of Zn(II) (Fig. 5) or NiO doped with 10% of Mn(ll) (Fig. 6), NiO doped with 10% of Co(ll) (Fig. 7) or NiO doped with 10% of Fe(III) (Fig. 8).

### DETAILED DESCRIPTION OF THE INVENTION

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

For the purposes of the invention, any ranges given include both the lower and the upper end-points of the range. Ranges given, such as temperatures, times, molar ratio, volume ratio and the like, should be considered approximate (i.e. with a 5% margin of variation around indicated point), unless specifically stated.

In the context of the invention, the term "electrode" refers to a body comprising an electron conductive section, said body being used to close an electrical circuit through a medium, such as a solid or an ionic solution, separating two electrodes. An electrode suitable for electrocatalysis is an electrode comprising an electrocatalytically active material that can be used as a catalyst in an electrochemical reaction, such as reduction or oxidation reactions.

In the context of the invention, the term "stable", when referring to an electron conductive material comprised in an electrode support submitted to the method of the invention refers to the fact that the mechanical, physical, chemical and electronic properties of the electron conductive material itself are essentially the same after carrying out the method of the invention. In particular, it refers to the fact that it does not suffer any chemical transformation, such as melting or ignition.

In the context of the invention, the term "metal phosphates" refers to a material comprising a metal cation that has at least one phosphate anion to balance the charge of the cation wherein, optionally, the phosphorus atom shares one or more oxygen atom with an adjacent phosphorus atom. The term "metal phosphates" thus includes metal metaphosphates, the metaphosphate ion having the formula PO₃⁻, metal phosphates, the phosphate ion having the formula PO₄³⁻ and metal pyrophosphates, the pyrophosphate ion having the formula P₂O₇⁴⁻.

In the context of the invention, the term "metal phosphites" refers to a material comprising a metal cation that has at least one phosphite anion to balance the charge of the cation. The term "metal phosphites" thus includes metal salts of the phosphite ion having the formula HPO₃²⁻, the phosphite ion having the formula PO₃³⁻ and of the phosphite ion having the formula H₂PO₃⁻.

In the context of the invention, the term "metal phosphides" refers to a material comprising a metal cation that has at least one phosphide anion to balance the charge of the cation. The term "metal phosphides" thus includes metal salts of the phosphide ion having the formula P³⁻.

In the context of the invention, the term "metal sulphates" refers to a material comprising a metal cation that has at least one sulphate anion or hydrogensulphate anion to balance the charge of the cation.

In the context of the invention, the term "metal sulfites" refers to a material comprising a metal cation that has at least one sulfite anion or hydrogensulfite anion to balance the charge of the cation.

In the context of the invention, the term "metal sulfides" refers to a material comprising a metal cation that has at least one sulfide anion to balance the charge of the cation.

In the context of the invention, the term "metal oxides" refers to a material comprising one or more metal cations that has at least one oxide anion to balance the charges of the one or more metal cations. Thus, the term "metal oxides" encompasses single metal oxide, mixed metal oxide, spinel oxide phases, perovskite phases and high entropy oxides.

In the context of the invention, the term "electrocatalytically active material" refers to a material suitable for promoting chemical reactions taking place at one or more sites of the material, said sites being in contact with an electrode. Examples of electrocatalytically active materials according to claim 1.

The term "solution-combustion synthesis" is known in the art and refers to a method through which a solid material deriving from a metal is prepared by a thermally induced self-propagating exothermal combustion reaction between an oxidizing agent, such as typically a source of a nitrate salt of the metal, and a reducing agent, also named fuel component, the oxidizing and reducing agents being in a solution. The highly exothermal reaction generates sufficient heat to promote the formation of the nano-scaled material deriving from the metal comprised in the source of metal nitrate salt.

In the context of the invention, the term "fuel component" refers to a compound that is soluble in the solvent of the solution-combustion synthesis as defined in claim 1.

In the context of the invention, the term "self-ignition" refers to an event corresponding to the starting point of a spontaneous combustion reaction. Thus, in the context of the solution-combustion synthesis, the self-ignition temperature of a solution is the temperature at which the exothermal reaction between the oxidant and the fuel component starts occurring.

The term "fuel cell" is known in the art and refers to an electrochemical device able to convert chemical energy into electrical energy. For instance, a fuel cell may use a reductant (hydrogen, gas) and an oxidant (oxygen, gas) to produce electricity and/or heat together with the reaction byproducts. For instance, in a fuel cell that uses hydrogen and oxygen in the gas phase, a molecule of hydrogen is converted at one electrode in two protons and two electrons, while a molecule of oxygen reacts with the protons and electrons produced at the other electrode to produce water.

The term "battery" is known in the art and refers to a device suitable for storing electrons. A battery may comprise an electrode comprising a layer of a material having a high capacitance, such as metal oxides.

The term "electrolyser" is known in the art and refers to an electrochemical device able to convert electrical energy into chemical energy. A water electrolyser typically splits water into oxygen and hydrogen. Different types of electrolysers are known in the art, including, for instance, alkaline electrolysers, proton exchange membrane electrolysers (PEM), alkaline exchange membrane electrolysers (AEM).

The terms "water oxidation" and "oxygen evolution reaction" (OER) may be used interchangeably. Both terms refer to the electrochemical conversion of a water molecule into half a molecule of oxygen, two protons and two electrons. Such reaction usually takes place at the anode in a water electrolyser.

The term "overpotential", when related to OER, is known in the art and refers to the difference between the potential that needs to be applied to an anode in a water electrolyser in order to achieve a certain degree of performance of OER, expressed as anodic current density and the standard potential for water splitting (1.23 V respect to the Reversible Hydrogen Electrode is the thermodynamic value). The anodic current density is directly correlated to the yield of production of oxygen. The overpotential required to reach a current density of 10 mA per cm², also abbreviated η₁₀, is frequently used in the art as a parameter of performance of an electrocatalytically active material suitable for OER. Suitable carriers for electrodes are known in the art and can be made from any material, such as electron-conductive and non-electron conductive materials, provided that, when the carrier is made of a non-electron conductive materials, the electrode further comprises an electron conductive material forming an electron conductive portion of the electrode. In embodiments falling outside the scope of the invention, such further electron conductive material may be an electron-conducting form of carbon, such as graphite, graphene, carbon black, reduced graphene oxide, which can be deposited or coated on the surface of the carrier. The carrier comprising an electron conductive material may also consist of an electron-conductive material forming an electron conductive portion of the electrode, said material being selected from the group consisting of nickel mesh, nickel foam and nickel felt. The electron conductive portion of the electrode is normally connected to the electric circuit, for example, through a copper wire connecting the electron-conducting portion with the other elements of the circuit.

In particular embodiments falling outside the scope of the invention, step (a) comprises providing a carrier comprising an electron conductive material selected from the group consisting of metal foil, carbon paper, carbon felt, transparent conducting oxides, glassy carbon and carbon cloth.

Thus, in embodiments falling outside the scope of the invention, the electron conductive material of step (a) is selected from the group consisting of copper mesh, iron mesh, titanium mesh, platinum mesh, copper felt, iron felt, titanium felt, platinum felt, iron foam, aluminium foam, titanium foam, copper foam, steel foam, nickel-iron foam, aluminium foil, nickel foil, copper foil, iron foil, titanium foil, platinum foil, carbon paper, carbon felt, glassy carbon, carbon cloth, indium tin oxide (ITO) and fluoride doped tin oxide (FTO).

In more particular embodiments falling outside the scope of the invention, step (a) comprises providing a carrier comprising an electron conductive material that is nickel foil.

In other more particular embodiments falling outside the scope of the invention, step (a) comprises providing a carrier comprising an electron conductive material selected from the group consisting of iron foam, aluminium foam, titanium foam, copper foam, steel foam and nickel-iron foam. It is more preferred that the electron conductive material of step (a) is nickel foam.

In other preferred embodiments, the carrier provided in step (a) is nickel foam. As nickel foam may be used as a carrier itself, it advantageously allows having the carrier and the electron conductive portion of the electrode in the same body.

In particular embodiments falling outside the scope of the invention, the source of a nitrate salt of a metal M in the precursor mixture of step (b) is a combination of a hydroxide salt of a metal M with nitric acid wherein M is selected from the group consisting of iron, molybdenum, cadmium, manganese, copper, zinc, palladium, iridium, ruthenium and platinum and the amount of nitric acid is at least 1 mole per mole of hydroxide in the metal salt.

In particular embodiments falling outside the scope of the invention, the source of a nitrate salt of a metal M in the precursor mixture of step (b) is that wherein M is selected from the group consisting of palladium, platinum, ruthenium, iridium, rhodium, manganese, iron, , cadmium, copper, titanium, zirconium, niobium, yttrium, zinc, cerium, vanadium, chromium, molybdenum, aluminium and wolfram.

In more particular embodiments falling outside the scope of the invention, the source of a nitrate salt of a metal M in the precursor mixture of step (b) is that wherein M is selected from the group consisting of iron, manganese, titanium, zirconium, niobium, yttrium, zinc, cadmium, cerium, iridium, rhodium, palladium, platinum, vanadium, chromium, copper, ruthenium, molybdenum, and aluminium.

In more particular embodiments falling outside the scope of the invention the source of a nitrate salt of a metal M in the precursor mixture of step (b) is that wherein M is selected from the group consisting of iron, molybdenum, cadmium, manganese, copper, zinc, palladium, iridium, ruthenium and platinum.

In more particular embodiments falling outside the scope of the invention, the source of a nitrate salt of a metal M in the precursor mixture of step (b) is that wherein M is selected from the group consisting of iron, manganese and zinc.

In more particular embodiments falling outside the scope of the invention, the source of a nitrate salt of a metal M in the precursor mixture of step (b) is that wherein M is selected from the group consisting of iron, copper and zinc.

In more particular embodiments falling outside the scope of the invention, the source of a nitrate salt of a metal M in the precursor mixture of step (b) is that wherein M is iron.

In more particular embodiments falling outside the scope of the invention, the source of a nitrate salt of a metal M in the precursor mixture of step (b) is that wherein M is copper.

In more particular embodiments of the first aspect of the invention, the source of a nitrate salt of a metal M in the precursor mixture of step (b) is that wherein M is cobalt.

In more particular embodiments of the first aspect of the invention, the source of a nitrate salt of a metal M in the precursor mixture of step (b) is that wherein M is nickel.

In more particular embodiments falling outside the scope of the invention, the source of a nitrate salt of a metal M in the precursor mixture of step (b) is a nitrate salt of a metal M or a solvate thereof wherein M is selected from the group consisting of palladium, platinum, ruthenium, iridium, rhodium, manganese, iron, copper, titanium, zirconium, niobium, yttrium, zinc, cadmium, cerium, vanadium, chromium, molybdenum, aluminium and wolfram.

In more particular embodiments falling outside the scope of the invention, the source of a nitrate salt of a metal M in the precursor mixture of step (b) is a nitrate salt of a metal M or a solvate thereof wherein M is selected from the group consisting of , iron, molybdenum, cadmium, manganese, copper, zinc, palladium, iridium, ruthenium and platinum.

In even more particular embodiments falling outside the scope of the invention, the source of a nitrate salt of a metal M in the precursor mixture of step (b) is a nitrate salt of a metal M, wherein M is selected from the group consisting of iron, manganese and zinc.

In even more particular embodiments falling outside the scope of the invention, the source of a nitrate salt of a metal M in the precursor mixture of step (b) is a nitrate salt of a metal M, wherein M is selected from the group consisting of iron, copper and zinc.

In even more particular embodiments falling outside the scope of the invention, the source of a nitrate salt of a metal M in the precursor mixture of step (b) is a nitrate salt of copper(II) or a solvate thereof.

In even more particular embodiments of the first aspect of the invention, the source of a nitrate salt of a metal M in the precursor mixture of step (b) is a nitrate salt of cobalt(ll) or a solvate thereof.

In even more particular embodiments falling outside the scope of the invention, the source of a nitrate salt of a metal M in the precursor mixture of step (b) is a nitrate salt of iron(lll) or a solvate thereof.

In even more particular embodiments of the first aspect of the invention, the source of a nitrate salt of a metal M in the precursor mixture of step (b) is a nitrate salt of nickel(ll) or a solvate thereof, such as Ni(NO₃)₂·(H₂O)₆.

In more particular embodiments falling outside the scope of the invention, the precursor mixture of step (b) comprises a fuel component suitable for the solution-combustion synthesis that is an organic compound other than urea, glycine, citric acid, acetylacetone and ethylene glycol satisfying at least one of the following conditions:
(i) the fuel component is an organic compound of molecular formula CₗHₘOₙNₖSⱼ wherein j is an integer comprised between 0 and 2, k is an integer comprised between 0 and 5, I is an integer comprised between 1 and 10, m is an integer comprised between 4 and 50, n is an integer comprised between 0 and 5;
(ii) the temperature of decomposition of the fuel component is below 500 °C;
(iii) the decomposition of the fuel component in the presence of a source of nitrate is an exothermal reaction;
(iv) the fuel component has a molecular weight below 300 grams per mole of fuel component.
The fuel component may further be a chelating agent for the metal M of the precursor mixture.

In even more particular embodiments falling outside the scope of the invention, the precursor mixture of step (b) comprises a fuel component suitable for the solution-combustion synthesis that is selected from the group consisting of alcohols, thiourea, thiosemicarbazide, thiophene optionally substituted at any available position with a (C₁-C₆)alkyl group, 1,2-dimethoxyethane, sugars (sucrose, glucose), carbohydrazide, hexamethylenetetramine, oxalyldihydrazide, hydrazine, ethylenediaminetetraacetic acid and mixtures thereof.

In even more particular embodiments falling outside the scope of the invention, the precursor mixture of step (b) comprises a fuel component suitable for the solution-combustion synthesis that is selected from the group consisting of thiourea, thiophene optionally substituted at any available position with a (C₁-C₆)alkyl group, thiosemicarbazide, citric acid, 1,2-dimethoxyethane, and mixtures thereof.

In other more particular embodiments falling outside the scope of the invention, the precursor mixture of step (b) comprises a fuel component suitable for the solution-combustion synthesis that is 1,2-dimethoxyethane.

In other more particular embodiments falling outside the scope of the invention, the precursor mixture of step (b) comprises a fuel component suitable for the solution-combustion synthesis that is hexamethylenetetramine.

In other more particular embodiments of the first aspect of the invention, the precursor mixture of step (b) comprises a fuel component suitable for the solution-combustion synthesis that is ethylene glycol.

In other more particular embodiments falling outside the scope of the invention, the precursor mixture of step (b) comprises a fuel component suitable for the solution-combustion synthesis that is selected from the group consisting of thiourea, thiophene optionally substituted at any available position with a (C₁-C₆)alkyl group, and thiosemicarbazide. Such fuel components are particularly used when the electrocatalytically active material of the electrode comprises metal sulphides, metal sulphites and/or metal sulphates, the sulphur atom of the fuel component being transferred to the active material.

The precursor mixture of step (b) comprises a source of nitrate salt of a metal M, and a fuel component wherein the molar ratio of fuel component to nitrate anion in the precursor mixture of step (b) is such that it allows essentially for the formation of the electrocatalytically active material during the combustion step of step (d). The skilled in the art person will easily recognize the amount of fuel component required for preparing essentially the electrocatalytically active material by writing down the reaction of conversion of the nitrate salt of the metal M to the electrocatalytically active material on the one hand, and the combustion reaction of the fuel component on the other hand. While the reaction of conversion of the nitrate salt of the metal M to the electrocatalytically active material releases oxygen, the combustion reaction of the fuel component requires oxygen. The optimal molar ratio of fuel component to nitrate anion in the precursor mixture of step (b) is such that no external oxygen is required to complete the combustion of the fuel component present in the precursor mixture of step (b).

In particular embodiments of the first aspect of the invention, when the electrocatalytically active material of the electrode is an optionally doped metal oxide, the reaction of formation of the active material from a nitrate salt of a metal M by solution-combustion synthesis using a fuel component of molecular formula CₗHₘOₙNₖ satisfies the following equations of chemical reactions A) and B):
A) 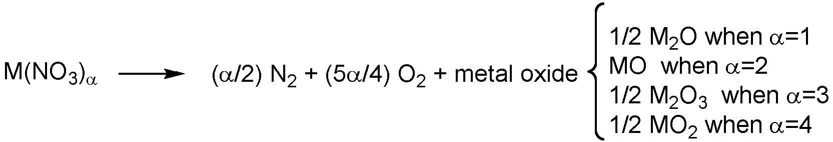
B) β CₗHₘOₙNₖ + β ((4l + m - 2n)/4) O₂ → βl CO₂ + (βm/2) H₂O + (βk/2) N₂ wherein α is an integer comprised from 1 to 4 that relates to the oxidation state of M in the source of nitrate salt, β is a rational number comprised from 0.01 to 10 reflecting the number of molar equivalents of fuel component with respect to the source of nitrate salt M engaged in the reaction and wherein l, m, n and k are respectively the number of atoms of C, H, O and N in the molecular formula of the fuel component.

Thus, when the electrocatalytically active material is optionally doped metal oxides, the optimal molar ratio of fuel component to nitrate anion in the precursor mixture of step (b) - for which the amount of oxygen released in equation A is equal to the amount of oxygen required in equation B - is such that the following equation 1 is satisfied: ${ϕ}^{1} = \frac{β}{α} = \frac{5}{4 l + m - 2 n}$ (Equation 1) wherein ϕ¹ is defined as the optimal number of moles of fuel component per each mole of nitrate in the precursor mixture of step (b).

In particular embodiments of the first aspect of the invention, the precursor mixture of step (b) comprises a source of a nitrate salt of a metal M as defined above, and a fuel component of formula CₗHₘOₙNₖ wherein k is an integer comprised between 0 and 5, l is an integer comprised between 1 and 10, m is an integer comprised between 4 and 50, n is an integer comprised between 0 and 5 that is selected from the group consisting of urea, glycine, citric acid, acetylacetone and ethylene glycol.

In more particular embodiments of the first aspect of the invention, the precursor mixture of step (b) comprises a source of a nitrate salt of a metal M as defined above, and a fuel component of formula CₗHₘOₙNₖ wherein k is an integer comprised between 0 and 5, l is an integer comprised between 1 and 10, m is an integer comprised between 4 and 50, n is an integer comprised between 0 and 5, and the fuel component is a chelating agent for the metal M of the precursor mixture that is selected from the group consisting of urea, glycine, citric acid, acetylacetone and ethylene glycol.

In even more particular embodiments of the first aspect of the invention, the precursor mixture of step (b) comprises a source of a nitrate salt of a metal M as defined above, and a fuel component of formula CₗHₘOₙNₖ wherein k is an integer comprised between 0 and 5, l is an integer comprised between 1 and 10, m is an integer comprised between 4 and 50, n is an integer comprised between 0 and 5 that is selected from the group consisting of urea, glycine, citric acid, acetylacetone and ethylene glycol, and wherein the fuel component is a chelating agent for the metal M of the precursor mixture, and the fuel component is such that, when an amount of fuel component equal to or higher than ϕ¹ is present in the precursor mixture of step (b), essentially all atoms of M are chelated by the fuel component, being ϕ¹as defined above.

In even more particular embodiments of the first aspect of the invention, the precursor mixture of step (b) comprises a source of a nitrate salt of a metal M as defined above, and a fuel component of formula CₗHₘOₙNₖ wherein k is an integer comprised between 0 and 5, l is an integer comprised between 1 and 10, m is an integer comprised between 4 and 50, n is an integer comprised between 0 and 5, and wherein the fuel component is a chelating agent for the metal M of the precursor mixture and the fuel component is such that, when an amount of fuel component equal to ϕ¹ is present in the precursor mixture of step (b), essentially all atoms of M are chelated by the fuel component, being ϕ¹ as defined above, and the fuel component is that is selected from the group consisting of urea, glycine, citric acid, acetylacetone and ethylene glycol. For instance, this is the case when the precursor mixture of step (b) is a solution of nickel(ll) nitrate or a solvate thereof as a source of nitrate salt of a metal M and ethylene glycol as fuel component (ϕ¹=0.5) in an amount of one mole of ethylene glycol per mole of nickel(ll) nitrate, that is one mole of ethylene glycol per each two moles of nitrate in the precursor mixture. Without being bound to theory, it is believed that the presence of chelated metals in the precursor mixture of step (b) favours the preparation of a solid material having isolated catalytic active sites and/or avoiding clustering of active sites, which results in improved electrocatalytic efficiency.

In other particular embodiments of the first aspect of the invention, the method of the invention allows preparing an electrode comprising an electrocatalytically active material consisting essentially of optionally doped metal oxides, and the precursor mixture of step (b) comprises a source of a nitrate salt of a metal M as defined above, and a fuel component of formula CₗHₘOₙNₖ selected from the group consisting of urea, glycine, citric acid, acetylacetone and ethylene glycol wherein the number of moles of fuel component per each mole of nitrate in the precursor mixture of step (b) is comprised between 0.8 and 1.2 times the value of ϕ¹, wherein ϕ¹ is as defined above; and wherein, preferably, k is an integer comprised between 0 and 5, l is an integer comprised between 1 and 10, m is an integer comprised between 4 and 50, and n is an integer comprised between 0 and 5.

In other particular embodiments of the first aspect of the invention, the method of the invention allows preparing an electrode comprising an electrocatalytically active material consisting essentially of optionally doped metal oxides and the precursor mixture of step (b) comprises a source of a nitrate salt of a metal M as defined above and a fuel component of formula CₗHₘOₙNₖ selected from the group consisting of urea, glycine, citric acid, acetylacetone and ethylene glycol wherein the number of moles of fuel component per each mole of nitrate in the precursor mixture of step (b) is comprised between 0.8 and 1.2 times the value of ϕ¹, wherein ϕ¹ is as defined above; and wherein, preferably, k is an integer comprised between 0 and 5, l is an integer comprised between 1 and 10, m is an integer comprised between 4 and 50, and n is an integer comprised between 0 and 5; and wherein the fuel component is such that the value corresponding to 4l + m - 2n is inferior to 15. When the value corresponding to 4l + m - 2n is inferior to 15, the fuel component is poorly reductive and will favour the formation of metal oxides.

In more particular embodiments of the first aspect of the invention, the method of the invention allows preparing an electrode comprising an electrocatalytically active material consisting essentially of optionally doped metal oxides and the precursor mixture of step (b) comprises a fuel component that is selected from the group consisting of urea, glycine, citric acid, acetylacetone and ethylene glycol wherein the number of moles of fuel component per each mole of nitrate in the precursor mixture of step (b) is comprised between 0.8 and 1.2 times the value of ϕ¹, wherein ϕ¹ is as defined above.

In more particular embodiments of the first aspect of the invention, the method of the invention allows preparing an electrode comprising an electrocatalytically active material consisting essentially of optionally doped metal oxides, and the precursor mixture of step (b) comprises a fuel component that is selected from the group consisting of urea, acetylacetone and ethylene glycol wherein the number of moles of fuel component per each mole of nitrate in the precursor mixture of step (b) is comprised between 0.8 and 1.2 times the value of ϕ¹, wherein ϕ¹ is as defined above.

In more particular embodiments of the first aspect of the invention, the method of the invention allows preparing an electrode comprising an electrocatalytically active material consisting essentially of optionally doped metal oxides, and the precursor mixture of step (b) comprises a fuel component that is ethylene glycol wherein the number of moles of fuel component per each mole of nitrate in the precursor mixture of step (b) is comprised between 0.8 and 1.2 times the value of ϕ¹, wherein ϕ¹ is as defined above.

In other particular embodiments of the first aspect of the invention, the method of the invention allows preparing an electrode comprising an electrocatalytically active material consisting essentially of optionally doped metal oxides and the precursor mixture of step (b) comprises a source of a nitrate salt of a metal M as defined above and a fuel component of formula CₗHₘOₙNₖ selected from the group consisting of urea, glycine, citric acid, acetylacetone and ethylene glycol wherein the number of moles of fuel component per each mole of nitrate in the precursor mixture of step (b) is equal to the value of ϕ¹, wherein ϕ¹ is as defined above; and wherein, preferably, k is an integer comprised between 0 and 5, l is an integer comprised between 1 and 10, m is an integer comprised between 4 and 50, and n is an integer comprised between 0 and 5.

In more particular embodiments of the first aspect of the invention, the method of the invention allows preparing an electrode comprising an electrocatalytically active material consisting essentially of optionally doped metal oxides, and the precursor mixture of step (b) comprises a fuel component that is selected from the group consisting of urea, glycine, citric acid, acetylacetone and ethylene glycol, wherein the number of moles of fuel component per each mole of nitrate in the precursor mixture of step (b) is equal to the value of ϕ¹, wherein ϕ¹ is as defined above.

In more particular embodiments of the first aspect of the invention, the method of the invention allows preparing an electrode comprising an electrocatalytically active material consisting essentially of optionally doped metal oxides, and the precursor mixture of step (b) comprises a fuel component that is selected from the group consisting of urea, acetylacetone and ethylene glycol, wherein the number of moles of fuel component per each mole of nitrate in the precursor mixture of step (b) is equal to the value of ϕ¹, wherein ϕ¹ is as defined above.

In other particular embodiments of the first aspect of the invention, the method of the invention allows preparing an electrode comprising an electrocatalytically active material wherein the electrocatalytically active material consisting essentially of optionally doped metal oxides wherein the fuel component of the precursor mixture of step (b) is selected from the group consisting of urea, glycine, citric acid, and ethylene glycol and wherein:
when the fuel component is urea, the molar ratio of fuel component to nitrate anion in the mixture of step (b) is about 5 moles of fuel component per every 6 moles of nitrate anion;
when the fuel component is glycine, the molar ratio of fuel component to nitrate anion in the mixture of step (b) is about 5 moles of fuel component per every 9 moles of nitrate anion;
when the fuel component is citric acid, the molar ratio of fuel component to nitrate anion in the mixture of step (b) is about 5 moles of fuel component per every 18 moles of nitrate anion;
when the fuel component is acetylacetone, the amount of fuel component in the mixture of step (b) is about 5 moles of fuel component per every 24 moles of nitrate anion in the mixture of step (b);
   and
when the fuel component is ethylene glycol, the molar ratio of fuel component to nitrate anion in the mixture of step (b) is about 1 mole of fuel component per every 2 moles of nitrate anion.

In even more particular embodiments of the first aspect of the invention, the method of the invention allows preparing an electrode comprising an electrocatalytically active material consisting essentially of optionally doped metal oxides wherein the fuel component of the precursor mixture of step (b) is ethylene glycol and the amount of fuel component in the precursor mixture of step (b) is of about 1 mole of fuel component per every 2 moles of nitrate anion in the mixture of step (b).

In other particular embodiments of the first aspect of the invention, when the method of the invention allows preparing an electrode comprising an electrocatalytically active material consisting essentially of a mixture of optionally doped metal oxides with one or more of metal sulphides, metal sulphates and metal sulphites, the precursor mixture of step (b) further comprises a sulphur source. The sulphur source may be a fuel component comprising in its molecular formula at least a sulphur atom, such as of thiourea, thiophene optionally substituted at any available position with a (C₁-C₆)alkyl group and semithiocarbazide. Such fuel component may be used alone or in combination with any of the fuel components disclosed above and allowing for the preparation of optionally doped metal oxides. Since the amount of sulphur atom provided by the sulphur source is determined by the amount of sulphur atoms in the electrocatalytically active material, the skilled person will know how to select the amount of sulphur source for the preparation of an electrocatalytically active material consisting essentially of a mixture of optionally doped metal oxides with one or more of metal sulphides, metal sulphates and metal sulphites. The oxidation state of the sulphur atom in the electrocatalytically active material is further determined by the reducing capacities and the amount of the one or more fuel components used in the precursor mixture of step (b). The skilled person will know how to adjust the amount of each fuel component to produce a metal sulphide phase, a metal sulphite phase or a metal sulphate phase by writing down and balancing the chemical equations of the combustion reaction.

In other particular embodiments of the first aspect of the invention, the method of the invention allows preparing an electrode comprising an electrocatalytically active material consisting essentially of optionally doped metal oxides or a mixture thereof with one or more of metal sulphides, metal sulphites, metal sulphates, metal phosphates, metal phosphites and metal phosphides wherein said mixture comprises at least half a mole of said optionally doped metal oxides per each mole of the mixture.

When the method of the invention allows preparing an electrode comprising an electrocatalytically active material consisting essentially of a mixture of optionally doped metal oxides with one or more of metal sulphides, metal sulphates and metal sulphites, optionally in combination with any of the embodiments described above and below, it is preferred that the amount of sulphur source in the precursor mixture of step (b) is such that the precursor mixture of step (b) contains no more than one mole of sulphur atoms per each two moles of metal M.

In other particular embodiments of the first aspect of the invention, when the method of the invention allows preparing an electrode comprising an electrocatalytically active material consisting essentially of a mixture of optionally doped metal oxides with one or more of metal sulphides, metal sulphates and metal sulphites, the precursor mixture of step (b) further comprises a sulphur source selected from the group consisting of thiourea, thiophene optionally substituted at any available position with a (C₁-C₆)alkyl group, metal sulphide salts, metal sulphite salts, metal sulphate salts, hydrogen sulphide, semithiocarbazide, ammonium sulphide, ammonium sulphite, ammonium sulphate and mixtures thereof.

In other particular embodiments of the first aspect of the invention, when the method of the invention allows preparing an electrode comprising an electrocatalytically active material consisting essentially of optionally doped metal oxides and a mixture thereof with one or more of metal sulphides, the sulphur source is selected from thiourea, thiophene optionally substituted at any available position with a (C₁-C₆)alkyl group, sodium sulphide, potassium sulphide, hydrogen sulphide and semithiocarbazide.

In other particular embodiments of the first aspect of the invention, when the method of the invention allows preparing an electrode comprising an electrocatalytically active material consisting essentially of optionally doped metal oxides and a mixture thereof with one or more of metal sulphides, metal sulphates and metal sulphites, the precursor mixture of step (b) further comprises a sulphur source selected from the group consisting of metal sulphide salts, metal sulphite salts, metal sulphate salts, hydrogen sulphide, ammonium sulphide, ammonium sulphite, ammonium sulphate and mixtures thereof. The metal in the sulphide, sulphite, sulphate salts may be an alkaline metal, an alkaline earth metal or a transition metal, such as metals of the iron group or a metal M as defined above. As will be obvious to the skilled person, such metal is further introduced in the electrocatalytically active material. This allows fine-tuning the properties of the metal oxide electrocatalytically active material.

In other particular embodiments of the first aspect of the invention, when the method of the invention allows preparing an electrode comprising an electrocatalytically active material consisting essentially of optionally doped metal oxides and a mixture thereof with one or more of metal sulphides, metal sulphates and metal sulphites, the precursor mixture of step (b) further comprises a metal sulphate salt, such as iron sulphate. It is believed to advantageously produce an electrode comprising an electrocatalytically active material whereby sulphur atoms may be removed by application of a potential to the electrode, thereby producing voids in the solid structure of the electrocatalytically active material and improving its electrocatalytic activity. When the sulphur source is iron(III) sulphate, it is preferably used in an amount of no more than 1 mole of iron sulphate per each two moles of the source of nitrate salt of metal M. More particularly, it is of from 2 to 4 moles of iron sulphate per each twenty moles of the source of nitrate salt of metal M.

In other particular embodiments of the first aspect of the invention, the method of the invention allows preparing an electrode comprising an electrocatalytically active material consisting essentially of a mixture of optionally doped metal oxides with one or more of metal phosphates, metals phosphites and metal phosphides. In said embodiments, the precursor mixture of step (b) further comprises a phosphorous source. Since the amount of phosphorous atom provided by the phosphorous source is equal to the amount of phosphorous atoms in the electrocatalytically active material, the skilled person will know how to select the amount of phosphorous source for the preparation of an electrocatalytically active material consisting essentially of a mixture of optionally doped metal oxides with one or more of metal phosphides, metal phosphates and metal phosphites. The oxidation state of the phosphorous atom in the electrocatalytically active material is further determined by the reducing capacities and the amount of the one or more fuel components used in the precursor mixture of step (b). The skilled person will know how to adjust the amount of each fuel component to produce a metal phosphide phase, a metal phosphite phase or a metal phosphate phase by writing down and balancing the chemical equations of the combustion reaction.

When the method of the invention allows preparing an electrode comprising an electrocatalytically active material consisting essentially of a mixture of optionally doped metal oxides with one or more of metal phosphates, metals phosphites and metal phosphides, optionally in combination with any of the embodiments described above and below, it is preferred that the amount of phosphorous source in the precursor mixture of step (b) is such that the precursor mixture of step (b) contains no more than one mole of phosphorous atoms per each two moles of metal M.

In other particular embodiments of the first aspect of the invention, when the method of the invention allows preparing an electrode comprising an electrocatalytically active material consisting essentially of a mixture of optionally doped metal oxides with one or more of metal phosphates and metal phosphides, the phosphorous source is selected from the group consisting of red phosphorous and ammonium or metal salts of dihydrogen phosphate, phosphate, hypophosphite, hydrogen phosphate, phosphite or phosphide. The metal in the phosphide, phosphite, phosphate salts may be an alkaline metal, an alkaline earth metal or a transition metal, such as metals of the iron group or a metal M as defined above. As will be obvious to the skilled person, such metal is further introduced in the electrocatalytically active material. This allows fine-tuning the properties of the metal oxide electrocatalytically active material.

In other particular embodiments of the first aspect of the invention, when the method of the invention allows preparing an electrode comprising an electrocatalytically active material consisting essentially of a mixture of optionally doped metal oxides with one or more of metal phosphates and metal phosphides, the phosphorous source is selected from the group consisting of red phosphorous, ammonium dihydrogen phosphate, ammonium phosphate, sodium phosphate, sodium dihydrogen phosphate, sodium hypophosphite, and ammonium hypophosphite.

In other particular embodiments of the first aspect of the invention, when the method of the invention allows preparing an electrode comprising an electrocatalytically active material consisting essentially of a mixture of optionally doped metal oxides with one or more of metal phosphates and metal phosphides, the phosphorous source is sodium hypophosphite.

In particular embodiments of the first aspect of the invention, the precursor mixture of step (b) is an aqueous solution comprising a nitrate salt of a metal M, and a water-soluble fuel component, wherein M, the fuel component and the molar ratio of fuel component to nitrate anions are each as defined above in any particular embodiment of the first aspect of the invention and in any technically feasible combination thereof.

In more particular embodiments of the first aspect of the invention, the precursor mixture of step (b) is an aqueous solution comprising a nitrate salt of a metal M and a water-soluble fuel component, wherein M, the fuel component and the molar ratio of fuel component to nitrate anions are each as defined above in any particular embodiment of the first aspect of the invention and wherein the concentration of the nitrate salt is comprised between 0.1 mole per liter and 1 mole per liter; preferably, it is of 0.5 mole per liter.

In even more particular embodiments of the first aspect of the invention, the precursor mixture of step (b) is an aqueous solution comprising nickel(II) nitrate or a solvate thereof, such as nickel(ll) nitrate hexahydrate.

In even more particular embodiments of the first aspect of the invention, the precursor mixture of step (b) is an aqueous solution comprising nickel(II) nitrate or a solvate thereof, such as nickel(II) nitrate hexahydrate and a fuel component selected from the group consisting of urea, glycine, citric acid, acetylacetone, and ethylene glycol.

In even more particular embodiments of the first aspect of the invention, the precursor mixture of step (b) is an aqueous solution comprising nickel(II) nitrate or a solvate thereof, such as nickel(II) nitrate hexahydrate and a fuel component selected from the group consisting of urea, glycine, citric acid, acetylacetone, hexamethylenetetramine and ethylene glycol, wherein:
when the fuel component is urea, the molar ratio of fuel component to nitrate anion in the mixture of step (b) is about 5 moles of fuel component per every 6 moles of nitrate anion;
when the fuel component is glycine, the molar ratio of fuel component to nitrate anion in the mixture of step (b) is about 5 moles of fuel component per every 9 moles of nitrate anion;
when the fuel component is citric acid, the molar ratio of fuel component to nitrate anion in the mixture of step (b) is about 5 moles of fuel component per every 18 moles of nitrate anion;
when the fuel component is acetylacetone, the amount of fuel component in the mixture of step (b) is about 5 moles of fuel component per every 24 moles of nitrate anion in the mixture of step (b);
   and
when the fuel component is ethylene glycol, the molar ratio of fuel component to nitrate anion in the mixture of step (b) is about 1 mole of fuel component per every 2 moles of nitrate anion.

In even more particular embodiments of the first aspect of the invention, the precursor mixture of step (b) is an aqueous solution comprising nickel(II) nitrate or a solvate thereof, such as nickel(II) nitrate hexahydrate, and ethylene glycol as fuel component wherein the molar ratio of fuel component to nitrate anion in the mixture of step (b) is about 1 mole of fuel component per every 2 moles of nitrate anion. This allows preparing an electrode comprising an electrocatalytically active material consisting essentially of nickel oxide.

In even more particular embodiments falling outside the scope of the invention, the precursor mixture of step (b) is an aqueous solution comprising copper(II) nitrate or a solvate thereof and hexamethylenetetramine as fuel component wherein the molar ratio of fuel component to nitrate anion in the mixture of step (b) is about 5 moles of fuel component per every 36 moles of nitrate anion. This allows preparing an electrode comprising an electrocatalytically active material consisting essentially of copper oxide.

In other particular embodiments falling outside the scope of the invention, the precursor mixture of step (b) is an aqueous solution comprising iron(III) nitrate or a solvate thereof and ethylene glycol as fuel component wherein the molar ratio of fuel component to nitrate anion in the mixture of step (b) is about 1 mole of fuel component per every 2 moles of nitrate anion. This allows preparing an electrode comprising an electrocatalytically active material consisting essentially of iron oxide in the spinel form.

In other particular embodiments of the first aspect of the invention, the precursor mixture of step (b) is an aqueous solution comprising cobalt(II) nitrate or a solvate thereof and urea as fuel component wherein the molar ratio of fuel component to nitrate anion in the mixture of step (b) is about 5 moles of fuel component per every 6 moles of nitrate anion. This allows preparing an electrode comprising an electrocatalytically active material consisting essentially of cobalt oxide in the spinel form.

In further particular embodiments of the first aspect of the invention, the precursor mixture of step (b) further comprises an electron conductive form of carbon, such as graphite, carbon black, graphene, reduced graphene oxides, carbon nanotubes. This allows providing an electrocatalytically active material with enhanced conductivity of electrons through the material.

The method of the invention also allows preparing electrodes comprising electrocatalytically active materials consisting essentially of mixed metal oxides, doped metal oxides doped with other metals, and mixtures thereof with one or more of metal sulphides, metal sulphites, metal sulphates, metal phosphates, metal phosphites and metal phosphides. The term "mixed metal oxides" refers to an active material comprising two or more metal oxide species. The term "doped metal oxide" refers to a metal oxide of a metal M wherein the metal M is partially and locally replaced by another metal, for instance by substitution of an atom of M in the crystal lattice of the active material by another atomic cation. The preparation of such systems may be achieved by addition of one or more suitable metal precursors in the precursor mixture of step (b). This advantageously allows preparing electrodes with enhanced electrocatalytic activity and/or additional properties in a simple manner. The skilled person will be able to adapt the teaching of the invention to reduce to practice the preparation of electrodes comprising of mixed metal oxides, doped metal oxides doped with other metals, and mixtures thereof with one or more of metal sulphides, metal sulphites, metal sulphates, metal phosphates, metal phosphites and metal phosphides by modifying the composition of the precursor mixture of step (b) accordingly, through the addition of one or more metal precursors and, optionally, sulphur sources and/or phosphorous sources in variable amounts to the precursor mixture. Further, it will be apparent to the skilled person that the teaching of the first aspect of the invention may be applied to any precursor mixture composition known in the art and suitable for the solution or gel combustion synthesis producing an electrocatalytically active material as the one of the first aspect of the invention.

In certain embodiments of the invention, the precursor mixture of step (b) further comprises a reducing agent. This is particularly useful when the electrocatalytically active material of the electrode comprises partially reduced forms of sulphur and/or phosphorous, such as metal sulphides, metal sulphites, metal phosphites and metal phosphides.

Thus, in further particular embodiments of the first aspect of the invention, the precursor mixture of step (b) further comprises one or more salts of formula M'ₚX_{q} or a solvate thereof, wherein:
M' is a cation other than M selected from the group consisting of lithium(I), sodium(I), potassium(I), caesium(I), magnesium(II), calcium(II), strontium(II), barium(II), nickel(II), nickel(III), iron(II), iron(III), cobalt(II), cobalt(III), manganese(II), manganese(III), copper(I), copper(II), zinc(II), palladium(II), palladium(IV), rhodium(I), rhodium(II), rhodium(III), iridium(I), iridium(III), iridium(IV), chromium(III), vanadium(III), molybdenum(I), molybdenum(II), molybdenum(III), molybdenum(IV), molybdenum(V), boron(I), boron(II), boron(III), aluminium(III), platinum(II) and platinum(IV) and mixtures thereof;
X is an anion selected from the group consisting of fluoride, chloride, bromide, iodide, acetate, propionate, dimethylacetate, trimethylacetate, formate, acetylacetonate, nitrate, phosphate, trifluoromethanesulfonate, sulphate, oxalate, carbonate, hydrogencarbonate, methanesulfonate, perchlorate, hydroxide and sulfamate; such that when X is hydroxide the precursor mixture optionally further comprises an acid in an amount comprised between half and twice the amount of hydroxide anions; and p and q are each an integer selected from 1, 2, 3 and 4 such that the sum of positive charges on M'ₚ is equal to the sum of negative charges on X_{q}.

In further particular embodiments of the first aspect of the invention, the precursor mixture of step (b) further comprises from one to five salts of formula M'ₚX_{q} or a solvate thereof as defined above. Preferably, the precursor mixture of step (b) further comprises from one to three salts of formula M'ₚX_{q} or a solvate thereof as defined above.

In further particular embodiments of the first aspect of the invention, the precursor mixture of step (b) further comprises a salt of formula M'ₚX_{q} or a solvate thereof, wherein:
M' is a cation selected from the group consisting of lithium(I), sodium(I), potassium(I), caesium(I), magnesium(II), calcium(II), strontium(II), barium(II), nickel(II), nickel(III) iron(II), iron(III), cobalt(II), cobalt(III), manganese(II), manganese(III), copper(I), copper(II), zinc(II), palladium(II), palladium(IV), rhodium(I), rhodium(II), rhodium(III), iridium(I), iridium(III), iridium(IV), chromium(III), vanadium(III), molybdenum(I), molybdenum(II), molybdenum(III), molybdenum(IV), molybdenum(V), boron(I), boron(II), boron(III), aluminium(III), platinum(II) and platinum(IV) and mixtures thereof;
X is an anion selected from the group consisting of fluoride, chloride, bromide, iodide, acetate, propionate, dimethylacetate, trimethylacetate, formate, acetylacetonate, nitrate, phosphate, trifluoromethanesulfonate, sulphate, oxalate, carbonate, hydrogencarbonate, methanesulfonate, perchlorate, hydroxide and sulfamate; such that when X is hydroxide the precursor mixture optionally further comprises an acid in an amount comprised between half and twice the amount of hydroxide anions; and p and q are each an integer selected from 1, 2, 3 and 4 such that the sum of positive charges on M'ₚ is equal to the sum of negative charges on X_{q}.

In further particular embodiments of the first aspect of the invention, the precursor mixture of step (b) further comprises a salt of formula M'ₚX_{q} or a solvate thereof, wherein:
M' is a metal cation selected from the group consisting of lithium(I), sodium(I), potassium(I), nickel(II), iron(II), iron(III), cobalt(II), manganese(II), copper(II), zinc(II), palladium(II), chromium (III), vanadium(III), molybdenum(III), aluminium(III) and platinum(II) and mixtures thereof;
X is an anion selected from the group consisting of chloride, bromide, iodide, acetate, formate, acetylacetonate, nitrate, phosphate, acetylacetonate, trifluoromethanesulfonate, sulphate, oxalate, carbonate, hydrogencarbonate, perchlorate, hydroxide and sulfamate; such that when X is hydroxide the precursor mixture optionally further comprises an acid in an amount comprised between half and twice the amount of hydroxide anions; and p and q are each an integer selected from 1, 2 and 3 such that the sum of positive charges on M'ₚ is equal to the sum of negative charges on X_{q}; preferably M' is selected from the group consisting of iron(III), manganese(II), zinc(ll) and cobalt(II); and wherein, in the precursor mixture of step (b), the molar ratio of the nitrate salt of the metal M to the salt of formula M'ₚX_{q} is comprised of from 100:1 to 1:2.

In more particular embodiments of the first aspect of the invention, the precursor mixture of step (b) further comprises a salt of formula M'ₚX_{q} or a solvate thereof as defined above wherein M' is selected from the group consisting of lithium(I), sodium(I), potassium(I), nickel(II), iron(II), iron(III), cobalt(II), manganese(II), copper(II) and zinc(II).

In even more particular embodiments of the first aspect of the invention, the precursor mixture of step (b) further comprises a salt of formula M'ₚX_{q} or a solvate thereof as defined above, wherein M' is selected from the group consisting of iron(III), cobalt(II), manganese(II), nickel(II) and zinc(II).

In even more particular embodiments of the first aspect of the invention, the precursor mixture of step (b) further comprises a salt of formula M'ₚX_{q} or a solvate thereof as defined above, wherein M' is selected from the group consisting of iron(III), cobalt(II), manganese(II), copper(II) and zinc(II).

In more particular embodiments of the first aspect of the invention, the precursor mixture of step (b) further comprises a salt of formula M'ₚX_{q} or a solvate thereof as defined above wherein X is an anion selected from the group consisting of chloride, bromide, iodide, acetate, formate, acetylacetonate, nitrate, phosphate, trifluoromethanesulfonate, sulphate, oxalate, carbonate, hydrogencarbonate, perchlorate and sulfamate.

In even more particular embodiments of the first aspect of the invention, the precursor mixture of step (b) further comprises a salt of formula M'ₚX_{q} or a solvate thereof as defined above wherein X is an anion selected from the group consisting of chloride, sulphate, acetylacetonate and nitrate.

In even more particular embodiments of the first aspect of the invention, the precursor mixture of step (b) further comprises a salt of formula M'ₚX_{q} or a solvate thereof as defined above, wherein M' is selected from the group consisting of iron(III), cobalt(II), manganese(II), nickel(II) and zinc(II) and wherein X is an anion selected from the group consisting of chloride, sulphate, acetylacetonate and nitrate.

In even more particular embodiments of the first aspect of the invention, the precursor mixture of step (b) further comprises a salt of formula M'ₚX_{q} or a solvate thereof as defined above wherein X is an anion selected from the group consisting of chloride, bromide, iodide, acetate, formate and nitrate; preferably, X is an anion selected from the group consisting of chloride, bromide and iodide; even more preferably, X is chloride.

In other preferred embodiments of the first aspect of the invention, the precursor mixture of step (b) further comprises a salt of formula M'ₚX_{q} or a solvate thereof as defined above wherein X is sulphate.

In even more particular embodiments of the first aspect of the invention, the precursor mixture of step (b) further comprises a salt of formula M'ₚX_{q} or a solvate thereof as defined above the molar ratio of the nitrate salt of the metal M to the salt of formula M'ₚX_{q} is comprised of from 10: 1 to 1:1; preferably, it is selected from the group consisting of 9:1; 4:1; 7:3 and 3:2.

In further particular embodiments of the first aspect of the invention the precursor mixture of step (b) further comprises a salt of formula M'ₚX_{q} or a solvate thereof that is selected from the group consisting of iron(III) chloride, manganese(II) chloride, zinc(II) chloride, cobalt(II) chloride and solvates thereof, and wherein the molar ratio of the nitrate salt of the metal M to the salt of formula M'ₚX_{q} is comprised of from 10:1 to 1:1; preferably, it is selected from the group consisting of 9:1; 8:2; 7:3; 6:4.

In further particular embodiments of the first aspect of the invention the precursor mixture of step (b) further comprises a salt of formula M'ₚX_{q} or a solvate thereof that is selected from the group consisting of iron(III) chloride, iron(III) nitrate, iron(III) sulphate, iron (III) acetylacetonate, nickel(II) nitrate, nickel(II) chloride, manganese(II) nitrate, manganese(II) chloride, zinc(II) chloride, zinc(II) nitrate, zinc(II) sulphate, zinc(II) acetylacetonate, cobalt(ll) chloride, cobalt (II) nitrate and solvates thereof, and wherein the molar ratio of the nitrate salt of the metal M to the salt of formula M'ₚX_{q} is comprised of from 10: 1 to 1:1; preferably, it is selected from the group consisting of 9:1; 4:1; 7:3 and 3:2.

In further particular embodiments of the first aspect of the invention the precursor mixture of step (b) further comprises a salt of formula M'ₚX_{q} that is selected from the group consisting of iron(III) chloride, manganese(II) chloride, zinc(II) chloride, cobalt(ll) chloride and solvates thereof, wherein the molar ratio of the nitrate salt of the metal M to the salt of formula M'ₚX_{q} is comprised of from 10: 1 to 1:1; preferably, it is selected from the group consisting of 9:1; 4:1; 7:3 and 3:2; more preferably, it is of 9:1.

In other particular embodiments of the first aspect of the invention the precursor mixture of step (b) further comprises a salt of formula M'ₚX_{q} that is iron(III) chloride or iron(III) nitrate or iron(III) acetylacetonate, wherein the molar ratio of the nitrate salt of the metal M to the salt of formula M'ₚX_{q} is comprised of from 10:1 to 1:1; preferably, it is selected from the group consisting of 9:1; 4:1; 7:3 and 3:2.

In even more particular embodiments falling outside the scope of the invention, the precursor mixture of step (b) is an aqueous solution comprising iron(III) nitrate or a solvate thereof, and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} or a solvate thereof that is nickel(II) nitrate, and wherein the molar ratio of the nitrate salt of the metal M to the salt of formula M'ₚX_{q} is comprised of from 10:1 to 1:1; preferably, it is selected from the group consisting of 9:1; 4:1; 7:3 and 3:2; more preferably, it is of 4:1 or 3:2.

In even more particular embodiments of the first aspect of the invention, the precursor mixture of step (b) is an aqueous solution comprising nickel(II) nitrate or a solvate thereof, such as nickel(ll) nitrate hexahydrate, and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} or a solvate thereof that is selected from the group consisting of iron(III) chloride, iron(III) nitrate, iron(III) sulphate, iron acetylacetonate, manganese(II) chloride, zinc(II) chloride, zinc(II) nitrate, zinc sulphate, zinc acetylacetonate, cobalt(II) chloride and solvates thereof, and wherein the molar ratio of the nitrate salt of the metal M to the salt of formula M'ₚX_{q} is comprised of from 10: 1 to 1:1; preferably, it is selected from the group consisting of 9:1; 4:1; 7:3 and 3:2; more preferably, it is of 9:1.

In even more particular embodiments of the first aspect of the invention, the precursor mixture of step (b) is an aqueous solution comprising nickel(II) nitrate or a solvate thereof, such as nickel(ll) nitrate hexahydrate, and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is selected from iron(III) chloride, iron(III) sulphate, iron(III) acetylacetonate and iron(III) nitrate, wherein the molar ratio of the nitrate salt of the metal M to the salt of formula M'ₚX_{q} is comprised of from 10: 1 to 1:1; preferably, it is selected from the group consisting of 9:1; 4:1; 7:3 and 3:2; more particularly, it is of 3:2. The resulting electrode exhibits particularly high activity for the oxygen evolution reaction when applied as an anode in water electrolysis. In particular embodiments, the salt of formula M'ₚX_{q} is iron(III) chloride. In more particular embodiments, the salt of formula M'ₚX_{q} is iron(III) sulphate. When the salt of formula M'ₚX_{q} is iron(III) sulphate, the produced electrode showed enhanced activity in OER than other electrodes.

In other particular embodiments falling outside the scope of the invention, the precursor mixture of step (b) is an aqueous solution comprising iron(III) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} or a solvate thereof that is nickel(II) nitrate and wherein the molar ratio of the nitrate salt of the metal M to the salt of formula M'ₚX_{q} is comprised of from 10:1 to 1:1; preferably, it is selected from the group consisting of 4:1 and 3:2.

As defined above, the precursor mixture of step (b) may further comprise a phosphorous source. This allows producing an electrode whereby the electrocatalytically active material comprises a metal phosphide, a metal phosphate or a metal phosphite. Thus, in other particular embodiments of the first aspect of the invention, the precursor mixture of step (b) is an aqueous solution comprising iron(III) nitrate and nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a phosphorous source as those defined above and in an amount as defined above.

In more particular embodiments, the precursor mixture of step (b) is an aqueous solution comprising iron(III) nitrate and nickel(II) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises sodium hypophosphite.

The method of the first aspect of the invention comprises the step (c) of transferring to the electron conductive material of the carrier of step (a) the precursor mixture of step (b) to produce an electrode precursor.

In preferred embodiments, the method of the first aspect of the invention comprises the step (c) of producing an electrode precursor by transferring the precursor mixture of step (b) to the electron conductive material of the carrier of step (a); wherein the precursor mixture of step (b), the carrier and/or the electron conductive material are each as defined in any one of the particular and preferred embodiments described above and any technically feasible combination thereof.

Thus, in preferred embodiments, the method of the first aspect of the invention allows preparing an electrode consisting essentially of optionally doped metal oxides as electrocatalytically active material and comprises the step (c) of transferring to the electron conductive material of the carrier of step (a) the precursor mixture of step (b) to produce an electrode precursor, wherein the electron conductive material of the carrier of step (a) is nickel foam, and the precursor mixture of step (b) is an aqueous solution comprising a nitrate salt of a metal or a solvate thereof, such as nickel(ll) nitrate hexahydrate, cobalt(ll) nitrate, and the fuel component of the precursor mixture of step (b) is selected from the group consisting of urea, glycine, citric acid, and ethylene glycol and wherein:
when the fuel component is urea, the molar ratio of fuel component to nitrate anion in the mixture of step (b) is about 5 moles of fuel component per every 6 moles of nitrate anion;
when the fuel component is glycine, the molar ratio of fuel component to nitrate anion in the mixture of step (b) is about 5 moles of fuel component per every 9 moles of nitrate anion;
when the fuel component is citric acid, the molar ratio of fuel component to nitrate anion in the mixture of step (b) is about 5 moles of fuel component per every 18 moles of nitrate anion;
when the fuel component is acetylacetone, the amount of fuel component in the mixture of step (b) is about 5 moles of fuel component per every 24 moles of nitrate anion in the mixture of step (b);
when the fuel component is ethylene glycol, the molar ratio of fuel component to nitrate anion in the mixture of step (b) is about 1 mole of fuel component per every 2 moles of nitrate anion; and
wherein the precursor mixture of step (b) optionally further comprises a salt of formula M'ₚX_{q} that is selected from the group consisting of iron(III) chloride, iron(III) nitrate, iron(III) sulphate, iron (III) acetylacetonate, nickel(II) nitrate, nickel(II) chloride, manganese(II) nitrate, manganese(II) chloride, zinc(II) chloride, zinc(II) nitrate, zinc(II) sulphate, zinc(II) acetylacetonate, cobalt(ll) chloride, cobalt (II) nitrate and solvates thereof, wherein the molar ratio of the nitrate salt of the metal M to the salt of formula M'ₚX_{q} is comprised of from 10:1 to 1:1; preferably, it is selected from the group consisting of 9:1; 4:1; 7:3 and 3:2; more particularly, it is of 3:2 or 9:1.

In more preferred embodiments, the method of the first aspect of the invention allows preparing an electrode consisting essentially of optionally doped metal oxides as electrocatalytically active material and comprises the step (c) of transferring to the electron conductive material of the carrier of step (a) the precursor mixture of step (b) to produce an electrode precursor, wherein the electron conductive material of the carrier of step (a) is nickel foam, and the precursor mixture of step (b) is an aqueous solution comprising nickel(II) nitrate or a solvate thereof, such as nickel(II) nitrate hexahydrate, and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is selected from the group consisting of iron(III) chloride, iron(III) nitrate, iron(III) sulphate, iron (III) acetylacetonate, nickel(II) nitrate, nickel(II) chloride, manganese(ll) nitrate, manganese(II) chloride, zinc(II) chloride, zinc(II) nitrate, zinc(II) sulphate, zinc(II) acetylacetonate, cobalt(II) chloride, cobalt (II) nitrate and solvates thereof, wherein the molar ratio of the nitrate salt of the metal M to the salt of formula M'ₚX_{q} is comprised of from 10:1 to 1:1; preferably, it is selected from the group consisting of 9:1; 4:1; 7:3 and 3:2; more particularly, it is of 3:2 or 9:1.

In other particular embodiments of the first aspect of the invention, the method of the invention is such that, during step (c), the precursor mixture of step (b) is transferred to the electron conductive material of the carrier of step (a) is carried out by a method selected from the group consisting of dip-coating, soaking, spray-coating, inkjet printing, spin coating, chemical bath deposition and immersion.

In preferred embodiments of the first aspect of the invention, the method of the invention is such that, during step (c), the precursor mixture of step (b) is transferred to the electron conductive material of the carrier of step (a) is carried out by dip-coating.

Thus, in preferred embodiments, the method of the first aspect of the invention allows preparing an electrode consisting essentially of optionally doped metal oxides as electrocatalytically active material and comprises the steps of:
(a) providing nickel foam as a carrier comprising an electron conductive material,
(b) providing a precursor mixture that is an aqueous solution comprising nickel(ll) nitrate or a solvate thereof, such as nickel(ll) nitrate hexahydrate, and a fuel component selected from the group consisting of urea, glycine, citric acid, and ethylene glycol and wherein:
   when the fuel component is urea, the molar ratio of fuel component to nitrate anion in the mixture of step (b) is about 5 moles of fuel component per every 6 moles of nitrate anion;
   when the fuel component is glycine, the molar ratio of fuel component to nitrate anion in the mixture of step (b) is about 5 moles of fuel component per every 9 moles of nitrate anion;
   when the fuel component is citric acid, the molar ratio of fuel component to nitrate anion in the mixture of step (b) is about 5 moles of fuel component per every 18 moles of nitrate anion;
   when the fuel component is acetylacetone, the amount of fuel component in the mixture of step (b) is about 5 moles of fuel component per every 24 moles of nitrate anion in the mixture of step (b);
   when the fuel component is ethylene glycol, the molar ratio of fuel component to nitrate anion in the mixture of step (b) is about 1 mole of fuel component per every 2 moles of nitrate anion; and
   wherein the precursor mixture of step (b) optionally further comprises a salt of formula M'ₚX_{q} that is selected from the group consisting of iron(III) chloride, iron(III) nitrate, iron(III) sulphate, iron (III) acetylacetonate, nickel(II) nitrate, nickel(II) chloride, manganese(II) nitrate, manganese(II) chloride, zinc(II) chloride, zinc(II) nitrate, zinc(II) sulphate, zinc(II) acetylacetonate, cobalt(ll) chloride, cobalt (II) nitrate and solvates thereof, wherein the molar ratio of the nitrate salt of the metal M to the salt of formula M'ₚX_{q} is comprised of from 10:1 to 1:1; preferably, it is selected from the group consisting of 9:1; 4:1; 7:3 and 3:2; more particularly, it is of 3:2 or 9:1;
(c)transferring to the electron conductive material of the carrier of step (a) the precursor mixture of step (b) to produce an electrode precursor by a method selected from the group consisting of dip-coating, soaking, spray-coating, inkjet printing, spin coating, chemical bath deposition and immersion; preferably by dip-coating, and wherein step (d) is as defined above.

In other preferred embodiments, the method of the first aspect of the invention allows preparing an electrode consisting essentially of optionally doped metal oxides as electrocatalytically active material and comprises the steps of:
(a) providing nickel foam as a carrier comprising an electron conductive material,
(b) providing a precursor mixture that is an aqueous solution comprising nickel(ll) nitrate or a solvate thereof, such as nickel(ll) nitrate hexahydrate, and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is selected from the group consisting of iron(III) chloride, iron(III) nitrate, iron(III) sulphate, iron (III) acetylacetonate, nickel(II) nitrate, nickel(II) chloride, manganese(II) nitrate, manganese(II) chloride, zinc(II) chloride, zinc(II) nitrate, zinc(II) sulphate, zinc(II) acetylacetonate, cobalt(ll) chloride, cobalt (II) nitrate and solvates thereof, wherein the molar ratio of the nitrate salt of the metal M to the salt of formula M'ₚX_{q} is comprised of from 10:1 to 1:1; preferably, it is selected from the group consisting of 9:1; 4:1; 7:3 and 3:2; more particularly, it is of 3:2 or 9:1;
(c) transferring to the electron conductive material of the carrier of step (a) the precursor mixture of step (b) to produce an electrode precursor by a method selected from the group consisting of dip-coating, soaking, spray-coating, inkjet printing, spin coating, chemical bath deposition and immersion; preferably by dip-coating, and wherein step (d) is as defined above.

In other preferred embodiments, the method of the first aspect of the invention allows preparing an electrode consisting essentially of optionally doped metal oxides as electrocatalytically active material and comprises the steps of:
(a) providing nickel foam as a carrier comprising an electron conductive material,
(b) providing a precursor mixture that is an aqueous solution comprising nickel(ll) nitrate or a solvate thereof, such as nickel(II) nitrate hexahydrate, ethylene glycol as a fuel component wherein the molar ratio of fuel component to nitrate anion in the mixture of step (b) is about 1 mole of fuel component per every 2 moles of nitrate anion; and wherein the precursor mixture of step (b) optionally further comprises a salt of formula M'ₚX_{q} that is iron(lll) chloride, wherein the molar ratio of the nitrate salt of the metal M to the salt of formula M'ₚX_{q} is is selected from the group consisting of 9:1; 8:2; 7:3 and 6:4; more particularly, it is of 3:2;
(c) transferring to the electron conductive material of the carrier of step (a) the precursor mixture of step (b) to produce an electrode precursor by a method selected from the group consisting of dip-coating, soaking, spray-coating, inkjet printing, spin coating, chemical bath deposition and immersion; preferably by dip-coating, and wherein step (d) is as defined above.

In other preferred embodiments, the method of the first aspect of the invention allows preparing an electrode consisting essentially of optionally doped metal oxides as electrocatalytically active material and comprises the steps of:
(a) providing nickel foam as a carrier comprising an electron conductive material,
(b) providing a precursor mixture that is an aqueous solution comprising nickel(ll) nitrate or a solvate thereof, such as nickel(II) nitrate hexahydrate, ethylene glycol as a fuel component wherein the molar ratio of fuel component to nitrate anion in the mixture of step (b) is about 1 mole of fuel component per every 2 moles of nitrate anion; and wherein the precursor mixture of step (b) optionally further comprises a salt of formula M'ₚX_{q} that is iron(III) sulphate, wherein the molar ratio of the nitrate salt of the metal M to the salt of formula M'ₚX_{q} is is selected from the group consisting of 9:1; 8:2; 7:3 and 6:4; more particularly, it is of 9:1;
(c) transferring to the electron conductive material of the carrier of step (a) the precursor mixture of step (b) to produce an electrode precursor by a method selected from the group consisting of dip-coating, soaking, spray-coating, inkjet printing, spin coating, chemical bath deposition and immersion; preferably by dip-coating, and wherein step (d) is as defined above.

The method of the first aspect of the invention comprises the step (d) of heating the electrode precursor obtained in step (c) at a temperature sufficiently high to cause the transferred precursor mixture to self-ignite. Such heating step may be carried out by using a heating ramp or an isotherm. When a heating ramp is used, it is preferably of two degrees Celsius per minute for temperatures above 100 °C. This advantageously allows determining the temperature of self-ignition of the electrode precursor with an acceptable degree of accuracy.

When the temperature of self-ignition of the electrode precursor is known, an isotherm may be used, for instance by introducing the electrode precursor in a muffle furnace or oven kept at a temperature equal to or higher than the temperature of self-ignition. This method is preferred as it allows preparing the electrode in a fast manner.

In particular embodiments, the method of the first aspect of the invention comprises the step (d) of heating the electrode precursor obtained in step (c) at a temperature of at least 180 °C; preferably at a temperature comprised between 200 °C and 500 °C; more preferably at a temperature comprised between 200 °C and 400 °C; and even more preferably at a temperature of 250 °C. This has the advantage of requiring a low energy input in the manufacture of the electrode.

In other particular embodiments, the method of the first aspect of the invention comprises the step (d) of heating the electrode precursor obtained in step (c) at a temperature of 350 °C. In other particular embodiments, the method of the first aspect of the invention comprises the step (d) of heating the electrode precursor obtained in step (c) at a temperature of 180 °C.

Thus, in preferred embodiments, the method of the first aspect of the invention allows preparing an electrode consisting essentially of optionally doped metal oxides as electrocatalytically active material and comprises the steps of:
(a) providing nickel foam as a carrier comprising an electron conductive material,
(b) providing a precursor mixture that is an aqueous solution comprising nickel(ll) nitrate or a solvate thereof, such as nickel(ll) nitrate hexahydrate, and a fuel component selected from the group consisting of urea, glycine, citric acid, and ethylene glycol and wherein:
   when the fuel component is urea, the molar ratio of fuel component to nitrate anion in the mixture of step (b) is about 5 moles of fuel component per every 6 moles of nitrate anion;
   when the fuel component is glycine, the molar ratio of fuel component to nitrate anion in the mixture of step (b) is about 5 moles of fuel component per every 9 moles of nitrate anion;
   when the fuel component is citric acid, the molar ratio of fuel component to nitrate anion in the mixture of step (b) is about 5 moles of fuel component per every 18 moles of nitrate anion;
   when the fuel component is acetylacetone, the amount of fuel component in the mixture of step (b) is about 5 moles of fuel component per every 24 moles of nitrate anion in the mixture of step (b);
   when the fuel component is ethylene glycol, the molar ratio of fuel component to nitrate anion in the mixture of step (b) is about 1 mole of fuel component per every 2 moles of nitrate anion; and
   wherein the precursor mixture of step (b) optionally further comprises a salt of formula M'ₚX_{q} that is selected from the group consisting of iron(III) chloride, iron(III) nitrate, iron(III) sulphate, iron (III) acetylacetonate, nickel(II) nitrate, nickel(II) chloride, manganese(II) nitrate, manganese(II) chloride, zinc(II) chloride, zinc(II) nitrate, zinc(II) sulphate, zinc(II) acetylacetonate, cobalt(ll) chloride, cobalt (II) nitrate and solvates thereof, wherein the molar ratio of the nitrate salt of the metal M to the salt of formula M'ₚX_{q} is comprised of from 10:1 to 1:1; preferably, it is selected from the group consisting of 9:1; 4:1; 7:3 and 3:2; more particularly, it is of 3:2 or 9:1;
(c) transferring to the electron conductive material of the carrier of step (a) the precursor mixture of step (b) to produce an electrode precursor by a method selected from the group consisting of dip-coating, soaking, spray-coating, inkjet printing, spin coating, chemical bath deposition and immersion; preferably by dip-coating, and
(d) heating the electrode precursor obtained in step (c) at a temperature of at least 180 °C; preferably at a temperature comprised between 200 °C and 500 °C; more preferably at a temperature comprised between 200 °C and 400 °C; and even more preferably at a temperature of 250 °C.

In more preferred embodiments, the method of the first aspect of the invention allows preparing an electrode consisting essentially of optionally doped metal oxides as electrocatalytically active material and comprises the steps of:
(a) providing nickel foam as a carrier comprising an electron conductive material,
(b) providing a precursor mixture that is an aqueous solution comprising nickel(ll) nitrate or a solvate thereof, such as nickel(ll) nitrate hexahydrate, and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is selected from the group consisting of iron(III) chloride, iron(III) nitrate, iron(III) sulphate, iron (III) acetylacetonate, nickel(II) nitrate, nickel(II) chloride, manganese(II) nitrate, manganese(II) chloride, zinc(II) chloride, zinc(II) nitrate, zinc(II) sulphate, zinc(II) acetylacetonate, cobalt(ll) chloride, cobalt (II) nitrate and solvates thereof and solvates thereof, wherein the molar ratio of the nitrate salt of the metal M to the salt of formula M'ₚX_{q} is comprised of from 10:1 to 1:1; preferably, it is selected from the group consisting of 9:1; 4:1; 7:3 and 3:2; more particularly, it is of 3:2 or 9:1;
(c) transferring to the electron conductive material of the carrier of step (a) the precursor mixture of step (b) to produce an electrode precursor by a method selected from the group consisting of dip-coating, soaking, spray-coating, inkjet printing, spin coating, chemical bath deposition and immersion; preferably by dip-coating, wherein step (d) is as defined above; and
(d) heating the electrode precursor obtained in step (c) at a temperature of at least 180 °C; preferably at a temperature comprised between 200 °C and 500 °C; more preferably at a temperature comprised between 200 °C and 400 °C; and even more preferably at a temperature of at least 180 °C; preferably 250 °C.

In more preferred embodiments, the method of the first aspect of the invention allows preparing an electrode consisting essentially of optionally doped metal oxides as electrocatalytically active material and comprises the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is selected from the group consisting of iron(III) chloride, iron(III) nitrate, iron(III) sulphate, iron (III) acetylacetonate, nickel(II) nitrate, nickel(II) chloride, manganese(ll) nitrate, manganese(II) chloride, zinc(II) chloride, zinc(II) nitrate, zinc(II) sulphate, zinc(II) acetylacetonate, cobalt(ll) chloride, cobalt (II) nitrate and solvates thereof, wherein the molar ratio of the nitrate salt of the metal M to the salt of formula M'ₚX_{q} is comprised of from 10: 1 to 1:1; preferably, it is selected from the group consisting of 9:1; 4:1; 7:3 and 3:2; more particularly, it is of 3:2 or 9:1;
(c) transferring to the electron conductive material of the carrier of step (a) the precursor mixture of step (b) to produce an electrode precursor; and
(d) heating the electrode precursor obtained in step (c) at a temperature of at least 180 °C; preferably 250 °C.

In more preferred embodiments, the method of the first aspect of the invention allows preparing an electrode consisting essentially of optionally doped metal oxides as electrocatalytically active material and comprises the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is selected from the group consisting of iron(III) chloride, iron(III) nitrate, iron(III) sulphate, iron (III) acetylacetonate, nickel(II) nitrate, nickel(II) chloride, manganese(ll) nitrate, manganese(II) chloride, zinc(II) chloride, zinc(II) nitrate, zinc(II) sulphate, zinc(II) acetylacetonate, cobalt(ll) chloride, cobalt (II) nitrate and solvates thereof, wherein the molar ratio of the nitrate salt of the metal M to the salt of formula M'ₚX_{q} is 10:1;
(c) transferring to the electron conductive material of the carrier of step (a) the precursor mixture of step (b) to produce an electrode precursor; and
(d) heating the electrode precursor obtained in step (c) at a temperature of at least 180 °C; preferably 250 °C.

In other preferred embodiments, the method of the first aspect of the invention allows preparing an electrode consisting essentially of optionally doped metal oxides as electrocatalytically active material and comprises the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is iron(III) chloride, wherein the molar ratio of the nitrate salt of the metal M to the salt of formula M'ₚX_{q} is selected from the group consisting of 9:1; 4:1; 7:3 and 3:2; more particularly, it is of 3:2 or 9:1;
(c) transferring to the electron conductive material of the carrier of step (a) the precursor mixture of step (b) to produce an electrode precursor; and
(d) heating the electrode precursor obtained in step (c) at a temperature of at least 180 °C; preferably of 250 °C.

In other preferred embodiments, the method of the first aspect of the invention allows preparing an electrode consisting essentially of optionally doped metal oxides as electrocatalytically active material and comprises the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is iron(III) sulphate, wherein the molar ratio of the nitrate salt of the metal M to the salt of formula M'ₚX_{q} is selected from the group consisting of 9:1; 4:1; 7:3 and 3:2; more particularly, it is of 9:1;
(c) transferring to the electron conductive material of the carrier of step (a) the precursor mixture of step (b) to produce an electrode precursor; and
(d) heating the electrode precursor obtained in step (c) at a temperature of at least 180 °C; preferably of 250 °C.
The resulting electrode is particularly efficient as an anode in oxygen production by water oxidation.

As defined above, the method of the first aspect of the invention may further comprise the step (e) of washing the composition obtained in step (d) with a polar solvent.

As will become apparent to the skilled person, each particular and preferred embodiment described above for each of the individual technical features of steps (a), (b), (c), (d) and, optionally, (e) and/or (f), may be independently combined to form a particular embodiment of the method of the first aspect of the invention. In particular, any component of the precursor mixture of step (b), namely the source of a nitrate salt of a metal M, the sulphur source, the phosphorous source and the salt of formula M'ₚX_{q}, in any of its form as defined above, may be combined with one another to form a precursor mixture as provided in step (b). The present application thus covers any combination of the particular and preferred embodiments described above for each of the technical features of steps (a), (b), (c), (d) and, optionally, (e) and/or (f) described above.

The method of the first aspect of the invention may further comprise additional steps allowing for the introduction of new functionalities in the electrocatalytically active material. For example, the metal oxides comprising material resulting from step (d) or (e) or (f) may further be treated to allow for the formation of a metal phosphide layer. Methods producing a metal phosphide layer, such as chemical vapour deposition, are well known in the art and will become apparent to the skilled person. As known in the art, the presence of a metal phosphide layer may advantageously produce more active catalysts for the OER.

As defined above, the second aspect of the invention refers to an electrode comprising a carrier and an electrocatalytically active material consisting essentially of optionally doped metal oxides or a mixture thereof with one or more of metal sulphides, metal sulphites, metal sulphates, metal phosphates, metal phosphites and metal phosphides obtained by the process of the first aspect of the invention wherein the electrocatalytically active material is attached onto the electrode carrier with no need for a binder. As will become apparent to the skilled person, each particular and preferred embodiment described above for each of the technical features of steps (a), (b), (c), (d) and, optionally, (e) and/or (f) of the first aspect of the invention may produce an electrode suitable for electrocatalysis. The present application thus covers an electrode obtained by the method of the first aspect of the invention comprising any combination of the particular and preferred embodiment described above for each of the technical features of steps (a), (b), (c), (d) and, optionally, (e) and/or (f).

The electrode of the second aspect of the invention may be incorporated into a device, such as an electrolyser, a battery or a fuel cell. It is a further aspect of the invention to provide a device comprising one or more electrodes according to the second aspect of the invention.

An electrolyser and a fuel cell typically comprise two electrodes connected by a conducting wire and an electrolyte closing an electrical circuit.

A battery, such as a Li-ion or Li-air battery, typically comprises two electrodes connected by a conducting wire and an electrolyte closing an electrical circuit.

The electrode of the second aspect of the invention is particularly useful for the oxygen evolution reaction, particularly when the electrocatalytically active material comprises nickel oxide. Thus, in particular embodiments of the third aspect of the invention, the device comprising one or more electrodes according to the second aspect of the invention is an electrolyser, more particularly a water electrolyser. In such a device, the electrode according to the second aspect of the invention is preferably an anode.

In particular embodiments, the device of the third aspect of the invention is a water electrolyser comprising an anode consisting of an electrode according to the second aspect of the invention wherein the electrocatalytically active material comprises optionally doped nickel oxide, a cathode comprising an electrocatalytically active material suitable for the hydrogen evolution reaction, and an alkaline electrolyte. Electrocatalytically active materials suitable for the hydrogen evolution reaction are known in the art and may be selected from the materials described in J. Mater. Chem. A, 2019, 7, 14971-15005, page 14977, Table 1, column 2, incorporated herein by reference. The alkaline medium is preferably an aqueous solution of a hydroxide salt of an alkaline cation such as lithium, sodium or potassium. Preferably, the alkaline medium is an aqueous solution of potassium hydroxide, such that the pH of the solution is at least 12; preferably at least 13. The cathode and anode are preferably connected through a copper wire.

Such water electrolyser may be an alkaline electrolyser connecting the anode and the cathode via a saline bridge, a porous spacer such as a frit or an aqueous electrolytic solution, or an alkaline exchange membrane electrolyser (AEM electrolyser) wherein the anode and the cathode are separated by a membrane suitable for exchanging hydroxide ions. Such membrane suitable for exchanging hydroxide ions are known in the art and may be selected from the group consisting of polysulfones, poly(2,6-dimethyl-p-phylene) oxide, polybenzimidazole, and inorganic composite materials.

In other particular embodiments, the device of the third aspect of the invention may be a battery, such as a lithium-ion battery or a lithium-air battery. Such devices are well known in the art and typically comprise at least one electrode comprising metal oxides doped with lithium, such as oxides of manganese, cobalt, nickel or iron and mixed oxides of these metals. These devices also comprise a counter electrode, such as a graphite electrode and titanium oxides, and an electrolyte, such as a solution of a lithium salt or a solid electrolyte.

As defined above, the fourth aspect of the invention relates to the use of the electrode of the second aspect of the invention in electrocatalytic oxidation methods.

The fourth aspect of the invention is to be construed as an electrocatalytic oxidation process wherein a substrate is oxidized by putting it in contact with the electrode of the second aspect of the invention.

In particular embodiments of the fourth aspect of the invention, the electrode of the second aspect of the invention is used as anode in electrocatalytic oxidation of water, also named oxygen evolution reaction (OER). Thus, in particular embodiments, the fourth aspect of the invention relates to a process for the preparation of oxygen from water comprising contacting water with an anode according to the second aspect of the invention in the presence of an alkaline medium.

In more particular embodiments of the fourth aspect of the invention, the fourth aspect of the invention relates to a process for the preparation of oxygen from water comprising contacting water with an anode according to the second aspect of the invention in the presence of an alkaline medium; wherein the alkaline medium is an aqueous solution of a hydroxide salt of an alkaline cation such as lithium, sodium or potassium; preferably, the alkaline medium is an aqueous solution of potassium hydroxide, such that the pH of the solution is at least 12; preferably at least 13.

In more particular embodiments of the fourth aspect of the invention, the fourth aspect of the invention relates to a process for the preparation of oxygen from water comprising contacting water with an anode according to the second aspect of the invention in the presence of an alkaline medium as defined above; wherein the anode obtained by the method of the first aspect of the invention comprises nickel oxides supported on a carrier comprising nickel foam.

In more particular embodiments of the fourth aspect of the invention, the fourth aspect of the invention relates to a process for the preparation of oxygen from water comprising contacting water with an anode according to the second aspect of the invention in the presence of an alkaline medium as defined above; wherein the anode is obtained by the method of the first aspect of the invention comprising the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is selected from the group consisting of iron(III) chloride, iron(III) nitrate, iron(III) sulphate, iron (III) acetylacetonate, nickel(II) nitrate, nickel(II) chloride, manganese(ll) nitrate, manganese(II) chloride, zinc(II) chloride, zinc(II) nitrate, zinc(II) sulphate, zinc(II) acetylacetonate, cobalt(ll) chloride, cobalt (II) nitrate and solvates thereof, wherein the molar ratio of the nitrate salt of the metal M to the salt of formula M'ₚX_{q} is comprised of from 10: 1 to 1:1; preferably, it is selected from the group consisting of 9:1; 4:1; 7:3 and 3:2; more particularly, it is of 3:2 or 9:1;
(c) transferring to the electron conductive material of the carrier of step (a) the precursor mixture of step (b) to produce an electrode precursor; and
(d) heating the electrode precursor obtained in step (c) at a temperature of at least 180 °C; preferably of 250 °C.

In more particular embodiments of the fourth aspect of the invention, the fourth aspect of the invention relates to a process for the preparation of oxygen from water comprising contacting water with an anode according to the second aspect of the invention in the presence of an alkaline medium as defined above; wherein the anode is obtained by the method of the first aspect of the invention comprising the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is iron(III) chloride, wherein the molar ratio of the nitrate salt of the metal M to the salt of formula M'ₚX_{q} is selected from the group consisting of 9:1; 4:1; 7:3 and 3:2; more particularly, it is of 3:2 or 9:1;
(c) transferring to the electron conductive material of the carrier of step (a) the precursor mixture of step (b) to produce an electrode precursor; and
(d) heating the electrode precursor obtained in step (c) at a temperature of at least 180 °C; preferably of 250 °C.

In more particular embodiments of the fourth aspect of the invention, the fourth aspect of the invention relates to a process for the preparation of oxygen from water comprising contacting water with an anode according to the second aspect of the invention in the presence of an alkaline medium as defined above; wherein the anode is obtained by the method of the first aspect of the invention comprising the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is iron(lll) sulphate, wherein the molar ratio of the nitrate salt of the metal M to the salt of formula M'ₚX_{q} is selected from the group consisting of 9:1; 4:1; 7:3 and 3:2; more particularly, it is of 9:1;
(c) transferring to the electron conductive material of the carrier of step (a) the precursor mixture of step (b) to produce an electrode precursor; and
(d) heating the electrode precursor obtained in step (c) at a temperature of at least 180 °C; preferably of 250 °C.

In more particular embodiments of the fourth aspect of the invention, the fourth aspect of the invention relates to a process for the preparation of oxygen from water comprising contacting water with an anode according to the second aspect of the invention in the presence of an alkaline medium as defined above wherein a potential of at least 1.3 V is applied to the electrode. This minimal value of anodic potential is required for the promotion of the oxygen evolution reaction. It is advantageous as this value is surprisingly low in comparison with the anodic potential values required in the state of the art for the promotion of the OER.

In more particular embodiments of the fourth aspect of the invention, the fourth aspect of the invention relates to a process for the preparation of oxygen from water comprising contacting water with an anode according to the second aspect of the invention in the presence of an alkaline medium; wherein a potential of at least 1.3 V is applied to the electrode and the alkaline medium is an aqueous solution of a hydroxide salt of an alkaline cation such as lithium, sodium or potassium; preferably, the alkaline medium is an aqueous solution of potassium hydroxide, such that the pH of the solution is at least 12; preferably at least 13. This value of pH is surprisingly low if compared with the pH of alkaline hydrolysis reported in the art. This advantageously allows preparing oxygen efficiently with reduced energetic needs together with the generation of a reduced amount of alkaline waste.

In more particular embodiments of the fourth aspect of the invention, the fourth aspect of the invention relates to a process for the preparation of oxygen from water comprising contacting water with an anode according to the second aspect of the invention in the presence of an alkaline medium as defined above; wherein the anode obtained by the method of the first aspect of the invention comprises optionally doped nickel oxides preferably supported on a carrier comprising nickel foam; and wherein a potential of at least 1.3 V is applied to the electrode and the alkaline medium is an aqueous solution of a hydroxide salt of an alkaline cation such as lithium, sodium or potassium; preferably, the alkaline medium is an aqueous solution of potassium hydroxide, such that the pH of the solution is at least 12; preferably at least 13.

In more particular embodiments of the fourth aspect of the invention, the fourth aspect of the invention relates to a process for the preparation of oxygen from water comprising contacting water with an anode according to the second aspect of the invention in the presence of an alkaline medium as defined above; wherein a potential of at least 1.3 V is applied to the electrode and the alkaline medium is an aqueous solution of a hydroxide salt of an alkaline cation such as lithium, sodium or potassium; preferably, the alkaline medium is an aqueous solution of potassium hydroxide, such that the pH of the solution is at least 12; preferably at least 13; and wherein the anode is obtained by the method of the first aspect of the invention comprising the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is selected from the group consisting of iron(III) chloride, iron(III) nitrate, iron(III) sulphate, iron (III) acetylacetonate, nickel(II) nitrate, nickel(II) chloride, manganese(ll) nitrate, manganese(II) chloride, zinc(II) chloride, zinc(II) nitrate, zinc(II) sulphate, zinc(II) acetylacetonate, cobalt(ll) chloride, cobalt (II) nitrate and solvates thereof, wherein the molar ratio of the nitrate salt of the metal M to the salt of formula M'ₚX_{q} is comprised of from 10: 1 to 1:1; preferably, it is selected from the group consisting of 9:1; 4:1; 7:3 and 3:2; more particularly, it is of 3:2 or 9:1;
(c) transferring to the electron conductive material of the carrier of step (a) the precursor mixture of step (b) to produce an electrode precursor; and
(d) heating the electrode precursor obtained in step (c) at a temperature of at least 180 °C; preferably of 250 °C.

In more particular embodiments of the fourth aspect of the invention, the fourth aspect of the invention relates to a process for the preparation of oxygen from water comprising contacting water with an anode according to the second aspect of the invention in the presence of an alkaline medium as defined above; wherein a potential of at least 1.3 V is applied to the electrode and the alkaline medium is an aqueous solution of a hydroxide salt of an alkaline cation such as lithium, sodium or potassium; preferably, the alkaline medium is an aqueous solution of potassium hydroxide, such that the pH of the solution is at least 12; preferably at least 13; and wherein the anode is obtained by the method of the first aspect of the invention comprising the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is iron(III) chloride, wherein the molar ratio of the nitrate salt of the metal M to the salt of formula M'ₚX_{q} is selected from the group consisting of 9:1; 4:1; 7:3 and 3:2; more particularly, it is of 3:2 or 9:1; more particularly, it is of 3:2;
(c) transferring to the electron conductive material of the carrier of step (a) the precursor mixture of step (b) to produce an electrode precursor; and
(d) heating the electrode precursor obtained in step (c) at a temperature of at least 180 °C; preferably of 250 °C.

In more particular embodiments of the fourth aspect of the invention, the fourth aspect of the invention relates to a process for the preparation of oxygen from water comprising contacting water with an anode according to the second aspect of the invention in the presence of an alkaline medium as defined above; wherein a potential of at least 1.3 V is applied to the electrode and the alkaline medium is an aqueous solution of a hydroxide salt of an alkaline cation such as lithium, sodium or potassium; preferably, the alkaline medium is an aqueous solution of potassium hydroxide, such that the pH of the solution is at least 12; preferably at least 13; and wherein the anode is obtained by the method of the first aspect of the invention comprising the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is iron(III) sulphate, wherein the molar ratio of the nitrate salt of the metal M to the salt of formula M'ₚX_{q} is selected from the group consisting of 9:1; 4:1; 7:3 and 3:2; more particularly, it is of 9:1;
(c) transferring to the electron conductive material of the carrier of step (a) the precursor mixture of step (b) to produce an electrode precursor; and
(d) heating the electrode precursor obtained in step (c) at a temperature of at least 180 °C; preferably of 250 °C.

In other particular embodiments of the fourth aspect of the invention, the fourth aspect of the invention relates to a process for the preparation of oxygen from water comprising contacting water with an anode according to the second aspect of the invention in the presence of an alkaline medium consisting of an aqueous solution of potassium hydroxide such that pH is 13 wherein the current density of the anode is of at least 10 mA per cm² when an overpotential lower than 0.375 V is applied to the anode. For instance, this is the case when the anode is obtained by the method of the first aspect of the invention comprising the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is selected from the group consisting of iron(III) chloride, iron(III) sulphate, manganese(II) chloride, zinc(II) chloride, cobalt(ll) chloride and solvates thereof, wherein the molar ratio of the nitrate salt of the metal M to the salt of formula M'ₚX_{q} is comprised of from 10: 1 to 1:1; preferably, it is selected from the group consisting of 9:1; 4:1; 7:3 and 3:2;
(c) transferring to the electron conductive material of the carrier of step (a) the precursor mixture of step (b) to produce an electrode precursor; and
(d) heating the electrode precursor obtained in step (c) at a temperature of 250 °C.

In other particular embodiments of the fourth aspect of the invention, the fourth aspect of the invention relates to a process for the preparation of oxygen from water comprising contacting water with an anode according to the second aspect of the invention in the presence of an alkaline medium consisting of an aqueous solution of potassium hydroxide such that pH is 13 wherein the current density of the anode is of at least 10 mA per cm² when an overpotential lower than 0.3 V is applied to the anode. This for instance the case when the anode is obtained by the method of the first aspect of the invention comprising the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) further comprises a salt of formula M'ₚX_{q} that is selected from the group consisting of iron(III) chloride, iron(III) nitrate, iron(III) sulphate, iron (III) acetylacetonate, nickel(II) nitrate, nickel(II) chloride, manganese(ll) nitrate, manganese(II) chloride, zinc(II) chloride, zinc(II) nitrate, zinc(II) sulphate, zinc(II) acetylacetonate, cobalt(ll) chloride, cobalt (II) nitrate and solvates thereof, wherein the molar ratio of the nitrate salt of the metal M to the salt of formula M'ₚX_{q} is selected from the group consisting of 9:1; 4:1; 7:3 and 3:2;
(c) transferring to the electron conductive material of the carrier of step (a) the precursor mixture of step (b) to produce an electrode precursor; and
(d) heating the electrode precursor obtained in step (c) at a temperature of at least 180 °C; preferably of 250 °C.

In other particular embodiments of the fourth aspect of the invention, the fourth aspect of the invention relates to a process for the preparation of oxygen from water comprising contacting water with an anode according to the second aspect of the invention in the presence of an alkaline medium consisting of an aqueous solution of potassium hydroxide such that pH is 13 wherein the current density of the anode is of at least 10 mA per cm² when an overpotential lower than 0.25 V is applied to the anode. For instance, this is the case when the anode is obtained by the method of the first aspect of the invention comprising the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is iron(III) chloride, wherein the molar ratio of the nitrate salt of the metal M to the salt of formula M'ₚX_{q} is selected from the group consisting of 9:1; 4:1; 7:3 and 3:2; more particularly, it is of 3:2;
(c) transferring to the electron conductive material of the carrier of step (a) the precursor mixture of step (b) to produce an electrode precursor; and
(d) heating the electrode precursor obtained in step (c) at a temperature of at least 180 °C; preferably of 250 °C.

In other particular embodiments of the fourth aspect of the invention, the fourth aspect of the invention relates to a process for the preparation of oxygen from water comprising contacting water with an anode according to the second aspect of the invention in the presence of an alkaline medium consisting of an aqueous solution of potassium hydroxide such that pH is 13 wherein the current density of the anode is of at least 10 mA per cm² when an overpotential lower than 0.25 V is applied to the anode. For instance, this is the case when the anode is obtained by the method of the first aspect of the invention comprising the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is iron(III) sulphate, wherein the molar ratio of the nitrate salt of the metal M to the salt of formula M'ₚX_{q} is selected from the group consisting of 9:1; 4:1; 7:3 and 3:2; more particularly, it is of 9:1;
(c) transferring to the electron conductive material of the carrier of step (a) the precursor mixture of step (b) to produce an electrode precursor; and
(d) heating the electrode precursor obtained in step (c) at a temperature of at least 180 °C; preferably of 250 °C.

In other particular embodiments of the fourth aspect of the invention, the fourth aspect of the invention relates to a process for the preparation of oxygen from water comprising contacting water with an anode according to the second aspect of the invention in the presence of an alkaline medium consisting of an aqueous solution of potassium hydroxide such that pH is 13 wherein the current density of the anode is of at least 10 mA per cm² when an overpotential lower than 0.2 V is applied to the anode. For instance, this is the case when the anode is obtained by the method of the first aspect of the invention comprising the steps of:
(a) providing nickel foam as a carrier comprising an electron conductive material,
(b) providing a precursor mixture that is an aqueous solution comprising nickel(ll) nitrate or a solvate thereof and ethylene glycol as fuel component wherein the molar ratio of fuel component to nitrate anion in the mixture of step (b) is about 1 mole of fuel component per every 2 moles of nitrate anion and wherein the precursor mixture of step (b) optionally further comprises a salt of formula M'ₚX_{q} that is iron(III) chloride, wherein the molar ratio of the nitrate salt of the metal M to the salt of formula M'ₚX_{q} is 3:2;
(c) transferring to the electron conductive material of the carrier of step (a) the precursor mixture of step (b) to produce an electrode precursor; and
(d) heating the electrode precursor obtained in step (c) at a temperature of 250 °C.

Throughout the description and claims the word "comprises" and variations of the word, are not intended to exclude other technical features, additives, components or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

The project leading to the present patent application received funding from the European's Union Horizon 2020 research and innovation programme under grant agreement no. 732840.

### EXAMPLES

Materials and reagents. Commercial reagents and solvents were purchased from Sigma Aldrich and Alfa Aesar and used as received without further purification. Nickel Foam was purchased from Goodfellow. KOH electronic grade 99.98% was provided by Alfa Aesar and purified before use following the procedure described in Chem. Mater. 2017, 29, 120-140, p. 133, section 2.7, 2^{nd} paragraph (incorporated herein by reference).

Powder X-ray diffraction (PXRD): PXRD patterns of powder samples were recorded on a D8 Advance Series 2Theta/Theta powder diffraction system using CuKα1-radiation in transmission geometry. The system is equipped with a VÅNTEC-1 single-photon counting PSD, a Germanium monochromator, a ninety positions auto changer sample stage, fixed divergence slits and a radial soller. The angular 2θ diffraction range was between 5 and 70°. The data were collected with an angular step of 0.02° at 12 s per step and sample rotation.

### Comparative example 1: Preparation of electrodes by drop-casting of prepared electrocatalytically active materials

Electrodes were prepared in two steps: In a first step, the preparation of the electrocatalytically active material was carried out according to procedure 1.1 (preparation of nickel oxide) or 1.2 (preparation of metal-doped nickel oxide) as described below. In a second step, the prepared electrocatalytically active material was supported on a conductive material of an electrode carrier according to procedure 1.3 as described below.

Procedure 1.1: Synthesis of undoped NiO. Undoped NiO was synthesized via one-pot solution-combustion synthesis by mixing in 10 mL of ultrapure water 350 mg of Ni(NO₃)₂(H₂O)₆ with ethylene glycol (67 µL) in the molar ratio 1:1 for a final metal concentration of 0.12 M. The combustion precursor mixture was stirred for 1 h before transferring inside a muffle furnace. Two gradients temperature where applied: an initial fast ramp of 10 °C/min up to 100 °C, followed by a slower one of 2 °C/min, until a final T = 350 °C was reached. Only 5 minutes of soaking connects the two ramps, whereas, at the end of the second, the sample was allowed to stay for 1 hour. The resulting powder was collected with a spatula and used without further purification.
PXRD spectrum of NiO: 2θ values: 37.28°, 43.32°, 62.94°, 75.49°, 79.48°
Average particle size of NiO, as measured by PXRD: 40 nm

Procedure 1.2: Synthesis of metal-doped NiO: M'_{0.1}-NiO. This synthesis was repeated identically to that of NiO as described in procedure 1.1, but 10% (molar amount) of metal chloride was added to the combustion mixture. Thus, a 0.24 M solution of the metal chloride was prepared by dissolving the corresponding metal chloride salt (FeCl₃, ZnCl₂, CoCl₂ or MnCl₂) in ultra-pure water. 500 µL of the resulting solution was injected in a vial containing 10 mL the combustion precursor mixture of the procedure 1.1 (0.12 M, 10 mL) described above. Following this procedure, NiO doped with 10% of Fe(III), NiO doped with 10% of Co(II), NiO doped with 10% of Zn(II) and NiO doped with 10% of Mn(ll) were prepared.
PXRD spectrum of NiO doped with 10% of Fe(III): 2θ values: 37.25 °, 43.29 °, 62.88 °, 75.42 °, 79.40 °
Average particle size of NiO doped with 10% of Fe(III), as measured by PXRD: 14 nm PXRD spectrum of NiO doped with 10% of Co(ll): 2θ values: 37.22 °, 43.26 °, 62.84 °, 75.36 °, 79.34°
Average particle size of NiO doped with 10% of Co(II), as measured by PXRD: 33 nm PXRD spectrum of NiO doped with 10% of Zn(II): 2θ values: 37.22 °, 43.25 °, 62.83 °, 75.35°, 79.34 °
Average particle size of NiO doped with 10% of Zn(II), as measured by PXRD: 41 nm PXRD spectrum of NiO doped with 10% of Mn(II): 2θ values: 37.1 °, 43.16 °, 62.70 °, 75.19 °, 79.17 °
Average particle size of NiO doped with 10% of Mn(II), as measured by PXRD: 12 nm As shown in Figure 1, the slight shifts in the values of 2θ with respect to NiO are attributed to the insertion of Fe(III), Co(II), Zn(II) or Mn(ll) in the crystal lattice of the NiO material. These results show that the solution-combustion synthesis of procedures 1.1 and 1.2, corresponding to the sequence consisting of steps (b) and (d) in the method of the first aspect of the invention, are suitable for the preparation of crystalline or partially crystalline metal oxide materials, such as NiO, NiO doped with 10% of Fe(III), NiO doped with 10% of Co(II), NiO doped with 10% of Zn(ll) or NiO doped with 10% of Mn(II).

Procedure 1.3: Preparation of electrode by drop-casting. An ink suitable for drop casting was prepared by dispersing 1.25 mg of the catalyst powder as obtained from Procedure 1.1 or Procedure 1.2 in 0.5 mL of a solution of water/acetone/Nafion (75:20:5 in volume) for a final concentration of 2.5 g/L. The so-prepared ink was sonicated for one hour, and a volume of 80 µL of the ink was drop-casted on a 1x1 cm² piece of nickel foam for a final loading of the active material of 200 µg/cm².

An electrode comprising NiO coated on nickel foam was prepared following Procedure 1.1 followed by Procedure 1.3. Similarly, an electrode comprising NiO doped with 10% of either Fe, Zn, Co or Mn coated on nickel foam was prepared following Procedure 1.2 followed by Procedure 1.3.

### Example 1: Preparation of self-supported active materials comprising nickel oxide on nickel foam

General procedure 1: Electrodes comprising self-supported active materials comprising nickel oxide on nickel foams were prepared according to the successive preparative steps:
(a) provide a clean piece of nickel foam as a carrier for an electrode comprising an electron conductive material by sonicating for 30 minutes a piece of nickel foam in an aqueous solution of hydrochloric acid (from 1 M to 6 M concentration).
(b) Preparation of precursor mixture: A 0.5 M solution of Ni(NO₃)₂(H₂O)₆ in ultra-pure water was prepared to provide solution 1. A molar amount of the fuel component indicated in Table 1 below corresponding to twice the value of ϕ¹ relative to each fuel component was added to solution 1. In addition, a 0.5 M solution of a metal chloride salt as indicated below in ultra-pure water was prepared to provide solution 2. Solutions 1 and 2 were mixed in different amounts, as defined in Table 1 below (volume) to yield solution 3. The resulting precursor mixture (solution 3) was allowed to stir one hour.
(c) The pre-cleaned piece of nickel foam of step (a) was dip-coated in the vial containing the precursor solution of step (b) for 180 seconds to provide an electrode precursor;
(d) The electrode precursor of step (c) was transferred into a muffle furnace kept at a temperature of 350 °C during 20 min to provide an electrode;
(e) The electrode of step (d) was rinsed with abundant ultra-pure water and sonicated 30 seconds in acetone, before being dried under nitrogen stream. The electrical connections of the resulting electrode were ensured by a copper wire. Part of the electrode was covered by epoxy resin and Kapton tape (polyimide) to protect the electrical contact, whereas a surface of 1 x 1 cm² was exposed to the electrolyte.

**Table 1**

| Fuel | ϕ¹ | Metal chloride | Volume Ratio solution 1:solution 2 | T (°C) | Product name |
|---|---|---|---|---|---|
| Urea | 5/6 | - | 10:0 | 350 | NiOu |
| Citric acid | 5/18 | - | 10:0 | 350 | NiO_{CA} |
| Glycine | 5/9 | - | 10:0 | 350 | NiO_{G} |
| acetylacetone | 5/24 | - | 10:0 | 350 | NiO_{acac} |
| Ethylene glycol | 0.5 | - | 10:0 | 350 | NiO_{EG} |
| Ethylene glycol | 0.5 | FeCl₃ | 9:1 | 350 | Fe_{0.1}·NiO |
| Ethylene glycol | 0.5 | CoCl₂ | 9:1 | 350 | Co_{0.1}·NiO |
| Ethylene glycol | 0.5 | ZnCl₂ | 9:1 | 350 | Zn_{0.1}·NiO |
| Ethylene glycol | 0.5 | MnCl₂ | 9:1 | 350 | Mn_{0.1}·NiO |
| Ethylene glycol | 0.5 | FeCl₃ | 8:2 | 350 | Fe_{0.2}·NiO |
| Ethylene glycol | 0.5 | FeCl₃ | 7:3 | 350 | Fe_{0.3}·NiO |
| Ethylene glycol | 0.5 | FeCl₃ | 6:4 | 350 | Fe_{0.4}·NiO |

Although step (d) is carried out at 350 °C in the examples of Table 1, identical results were obtained when step (d) was carried out at 250 °C. It is advantageous as it allows reducing the amount of energy required to prepare the catalytically active electrode.

### Example 2: Preparation of self-supported active materials comprising optionally doped metal oxide on nickel foam

General procedure 2: Electrodes comprising self-supported active materials comprising nickel oxide on nickel foams were prepared according to the successive preparative steps:
(a) provide a clean piece of nickel foam as a carrier for an electrode comprising an electron conductive material by sonicating for 30 minutes a piece of nickel foam in an aqueous solution of hydrochloric acid (from 1 M to 6 M concentration).
(b) Preparation of precursor mixture: A 0.5 M solution of a nitrate salt of a metal M in ultra-pure water was prepared to provide solution 1. A molar amount of the fuel component indicated in Table 2 below corresponding to the amount indicated in Table 2 was added to the solution. In addition, a 0.5 M solution of a salt of formula M'ₚX_{q} as indicated below in ultra-pure water was prepared to provide solution 2. Solutions 1 and 2 were mixed in different amounts, as defined in Table 2 below (volume) to yield solution 3. The resulting precursor mixture (solution 3) was allowed to stir one hour.
(c) The pre-cleaned piece of nickel foam of step (a) was dip-coated in the vial containing the precursor solution of step (b) for 180 seconds to provide an electrode precursor;
(d) The electrode precursor of step (c) was transferred into a muffle furnace kept at a temperature of 180 °C during 2 min to provide an electrode;
(e) The electrode of step (d) was rinsed with abundant ultra-pure water and sonicated 30 seconds in acetone, before being dried under nitrogen stream.

**Table 2**

| Metal nitrate salt | Fuel | Ratio metal nitrate to fuel¹ | M'ₚX_{q} | Vol. Ratio Sol. 1 : sol. 2 | Name of electrode | PXRD peaks (2θ values)² |
|---|---|---|---|---|---|---|
| Ni(NO₃)₂ | Ethylene glycol | 1:0.95 | - | 1:0 | NiO | 37.28°,43.32°, 62.94°,75.49°, 79.48° |
| Cu(NO₃)₂ | Hexamethylenetetramine | 5:18 | - | 1:0 | CuO | 32.52°,35.54°, 38.73°,48.83°, 53.53° |
| Co(NO₃)₂ | Urea | 5:3 | - | 1:0 | Co₃O₄ | 19.01°,31.33°, 36.92°,44.89°, 59.43°,65.36° |
| Fe(NO₃)₃ | Ethylene glycol | 1:1.42 | - | 1:0 | Fe₃O₄ | 21.08°,30.31°, 35.67°,43.04°, 57.40° |
| Fe(NO₃)₃ | Ethylene glycol | 1:0.95 | Ni(NO₃)₂ | 4:1 | Ni_{0.2}·Fe₃O₄ | 21.08°,30.31°, 35.67°,43.04°, 57.40° |
| Fe(NO₃)₃ | Ethylene glycol | 1:0.95 | Ni(NO₃)₂ | 3:2 | Ni_{0.4}·Fe₃O₄ | 21.08°,30.31°, 35.67°,43.04°, 57.40° |
| Ni(NO₃)₂ | Ethylene glycol | 1:0.95 | FeCl₃ | 9:1 | Fe_{0.1}·NiO | 37.25°,43.29°, 62.88°, 75.42°, 79.40° |
| Ni(NO₃)₂ | Ethylene glycol | 1:0.95 | FeCl₃ | 4:1 | Fe_{0.2}·NiO | 37.25°,43.29°, 62.88°, 75.42°, 79.40° |
| Ni(NO₃)₂ | Ethylene glycol | 1:0.95 | FeCl₃ | 7:3 | Fe_{0.3}·NiO | 37.25°,43.29°, 62.88°, 75.42°, 79.40° |
| Ni(NO₃)₂ | Ethylene glycol | 1:0.95 | FeCl₃ | 3:2 | Fe_{0.4}·NiO | 37.25°,43.29°, 62.88°, 75.42°, 79.40° |
| Ni(NO₃)₂ | Ethylene glycol | 1:0.95 | Fe(NO₃)₃ | 9:1 | Fe_{0.1}^{N}·NiO | 37.25°,43.29°, 62.88°, 75.42°, 79.40° |
| Ni(NO₃)₂ | Ethylene glycol | 1:0.95 | Zn(NO₃)₂ | 9:1 | Zn_{0.1}^{N}·NiO | 37.22°,43.25°, 62.83°,75.35°, 79.34° |
| Ni(NO₃)₂ | Ethylene glycol | 1:0.95 | ZnCl₂ | 9:1 | Zn_{0.1}·NiO | 37.22°,43.25°, 62.83°,75.35°, 79.34° |
| Ni(NO₃)₂ | Ethylene glycol | 1:0.95 | Fe₂(SO₄)₃ | 9:1 | Fe_{0.1}^{S}·NiO | 37.25°,43.29°, 62.88°, 75.42°, 79.40° |
| Ni(NO₃)₂ | Ethylene glycol | 1:0.95 | Fe₂(SO₄)₃ | 4:1 | Fe_{0.2}^{S}·NiO | 37.25°,43.29°, 62.88°, 75.42°, 79.40° |
| Ni(NO₃)₂ | Ethylene glycol | 1:0.95 | Zn(SO₄)₂ | 9:1 | Zn_{0.1}^{S}·NiO | 37.22°,43.25°, 62.83°,75.35°, 79.34° |
| Ni(NO₃)₂ | Ethylene glycol | 1:0.95 | Fe(acac)₃ | 9:1 | Fe_{0.1}^{A}·NiO | 37.25°,43.29°, 62.88°, 75.42°, 79.40° |
| Ni(NO₃)₂³ | Ethylene glycol | 1:0.95 | Fe(NO₃)₃ | 1:1 | Ni_{0.5}·Fe_{0.5}P_{y} O₄ | 21.08°,30.31°, 35.67°,43.04°, 57.40° |

| | | | | | | |
|---|---|---|---|---|---|---|
| ¹ based on the total amount of nitrate anions in precursor mixture (e.g. incuding when X is nitrate in M'ₚX_{q}) ² Values of 2θ as measured by PXRD spectroscopy carried out on a sample powder obtained from the surface of the as-produced electrode ³ 0.25 M solution of Fe(NO₃)₃ and 0.25 M solution of Ni(NO₃)₂ were mixed in a 1:1 volume ratio. NaH₂PO₂ was added to the mixture such that the final concentration of the phosphorous source is 0.25 M. | | | | | | |

As shown in Table 2, when the metal nitrate is nickel(II) nitrate, the powder X-ray diffraction pattern of the active material produced by the method of the invention is consistent with the formation of a nickel oxide NiO phase that is optionally doped with the metal salt of formula M'ₚX_{q} as indicated. When the metal nitrate is copper(II) nitrate, the powder X-ray diffraction pattern of the active material produced is not according to the method of the invention of claim 1 but it is still consistent with the formation of a copper oxide CuO phase. When the metal nitrate is cobalt(II) nitrate, the powder X-ray diffraction pattern of the active material produced by the method of the invention is consistent with the formation of a spinel cobalt oxide Co₃O₄ phase. When the metal nitrate is iron(III) nitrate, the powder X-ray diffraction pattern of the active material produced is not according to the method of the invention but it is still consistent with the formation of a spinel iron oxide Fe₃O₄ phase that is optionally doped with the metal salt of formula M'ₚX_{q} as indicated.

As shown in Table 2, when the metal salt of formula M'ₚX_{q} is such that X is sulphate, Energy Dispersive X-Ray analysis of the material indicates the presence of sulphur atoms in the active material in a molar amount correlated with the relative molar amount of sulphur atoms present in the precursor mixture. This indicates the presence of metal sulphides, metal sulphites and/or metal sulphates in the active phase, such that the active material is a mixture of an optionally doped metal oxide with one or more of metal sulphides, metal sulphites and metal sulphates.

When the precursor mixture comprises a phosphorous source such as NaH₂PO₂, Energy Dispersive X-Ray analysis of the material indicates the presence of phosphorous atoms in the active material. The presence of oxidized forms of phosphorous in the active material is further confirmed in by FT-ATR spectroscopy that reveals the presence of the characteristic bands associated to the stretching of P-O bonds in the 800-1200 cm⁻¹ region. This indicates the presence of metal phosphites and/or metal phosphates in the active phase, such that the active material is a mixture of an optionally doped metal oxide with one or more of metal phosphites and metal phosphates.

### Example 3: Water oxidation reactions

General procedure 3: To an electrochemical cell formed by a glass vial maintained at constant temperature thanks to an external water circuit, a reference electrode consisting of Hg/HgO, a counter-electrode consisting of platinum Pt and a working electrode consisting of an electrode as prepared in comparative example 1 or example 1 was added a 0.1 M solution of potassium hydroxide in ultra-pure water. An electrical potential was applied between the counter-electrode and the working electrode and the current density at the working electrode was measured. The current density at the electrode is proportional to the amount of oxygen produced at the anode. In all cases, Faradaic yields are close to 100%, indicating negligible ohmic losses and excellent correlation of current density with oxygen yield.

Comparison of fuels: Table 3 summarizes the results obtained for water oxidation using different electrodes as prepared in Example 1 using different fuels. The electrochemical surface area (ECSA) was measured by cyclic voltammetry following a method known in the art and described in J. Am. Chem. Soc. 2015, 137, 4347-4357, from the last paragraph of page 4349 to equation (2) described on page 4350, incorporated herein by reference. η₁₀ (expressed in mV) corresponds to the overpotential applied to the electrode for which a current density of 10 mA per cm² is obtained. The higher the ECSA is, and the lower the overpotential is, the more efficient the electrode will be.

**Table 3**

| Electrode | ECSA (cm²) | η₁₀ (mV) |
|---|---|---|
| NiO_{acac} | 1325 | 437 |
| NiO_{U} | 1500 | 420 |
| NiO_{CA} | 1625 | 398 |
| NiO_{G} | 1850 | 387 |
| NiO_{EG} | 2400 | 350 |

The results of Table 3 suggest that ethylene glycol is the preferred fuel for the preparation of an electrode suitable for water oxidation when the active material comprises or consists of nickel oxide.

Comparison of electrodes: The electrodes prepared according to the procedures described in Example 1 and Comparative Example 1 were tested individually in water oxidation experiments according to General Procedure 3. The values of η₁₀ (expressed in mV), as described above, were recorded to compare the efficiencies of each electrode in water oxidation. The obtained results are shown in Table 4.

**Table 4**

| Electrode | Method of preparation | |
|---|---|---|
| | Example 1 | Comparative Example 1 |
| Fe_{0.4}-NiO | 190 | - |
| Fe_{0.3}-NiO | 220 | - |
| Fe_{0.2}-NiO | 226 | - |
| Fe_{0.1}·NiO | 239 | 346 |
| Co_{0.1}·NiO | 285 | 370 |
| Mn_{0.1}·NiO | 321 | 415 |
| NiO_{EG} | 350 | 428 |
| Zn_{0.1}·NiO | 362 | 450 |

The results of Table 4 show that the electrodes prepared according to the procedure described in the first aspect of the invention are more performant than the electrodes prepared according to a method wherein the active material is separately prepared by solution-combustion and further supported onto the carrier of the electrode. The observed difference in overpotential value shows that the method of the invention is useful for the preparation of electrodes with higher energetic efficiency since a similar degree of performance is obtained when lower values of potential are applied to the electrode. Remarkably, Figures 4 to 8 further confirm this observation made for a value of current density of 10 mA per cm² over the whole range of current densities. The method of the invention advantageously does not require the use of a binder to support the active material on the electrode carrier while providing an enhanced efficiency of the produced electrode.

Table 4 also suggests that an electrode comprising an active material consisting of nickel oxide optionally doped with from 10% to 40% (mole/mole) of a metal of the iron group, such as zinc, cobalt, manganese or iron, is suitable as an anode for water oxidation or OER. This is further confirmed by Figure 2 over a larger range of current densities. In particular, Table 4 shows that an electrode comprising an active material consisting of nickel oxide doped with from 10% to 40% (mole/mole) of iron(III) is particularly efficient, more particularly when the active material consists of nickel oxide doped with 40% (mole/mole) of iron, as reflected by the low η₁₀ value.

Figure 3 shows the stability of the behaviour of the electrodes Fe_{0.1}·NiO, Co_{0.1}·NiO, Mn_{0.1}·NiO, and NiO_{EG} (Tafel plots and slopes). Figure 3 shows that the electrodes of the invention present low values of Tafel slopes, in particular when the active material consists of nickel oxide doped with iron. This is advantageous as it indicates that a high yield of oxygen can be achieved at low values of overpotential.

The water oxidation experiment of Example 3 is carried out in a 0.1 M KOH solution, which represents a pH value of 13. This is advantageous as it allows producing oxygen with a reduced amount of alkaline waste. In addition, the active material is less sensitive to corrosion than other materials (such as metal (0), metal hydroxides), and is thus more resistant in the conditions of operation.

The electrodes NiO_{EG}, Fe_{0.1}·NiO, Co_{0.1}·NiO, Mn_{0.1}·NiO and Zn_{0.1}·NiO were operated as described in Example 3 at a current density of 10 mA per cm² during a period of 24 hours. During this period, the potential required for achieving this current density remained constant or decreased, indicating an improvement in the activity.

More particularly, an accelerated degradation test of Fe_{0.1}·NiO measured by chronopotentiometry reveals a decrease of about 30 mV of η₁₀ after 2500 cycles. This indicates that the electrode of the invention is stable upon repeated operation time.

The electrodes prepared according to the procedures described in Example 2 were tested individually in water oxidation experiments according to General Procedure 3. The values of η₁₀ (expressed in mV), as described above, were recorded to evaluate the efficiencies of each electrode in water oxidation. The obtained results are shown in Table 5.

**Table 5**

| Electrode | η₁₀ (mV) | Electrode | η₁₀ (mV) | Electrode | η₁₀ (mV) |
|---|---|---|---|---|---|
| NiO | 350 | Fe₃O₄ | 304 | Ni_{0.2}·Fe₃O₄ | 277 |
| Co₃O₄ | 373 | Ni_{0.4}·Fe₃O₄ | 269 | Fe_{0.1}·NiO | 239 |
| Fe_{0.2}·NiO | 226 | Fe_{0.3}·NiO | 220 | Fe_{0.4}·NiO | 190 |
| Zn_{0.1}·NiO | 362 | Fe_{0.1}^{s}·NiO | 188 | Fe_{0.1}^{A}·NiO | 223 |
| Ni_{0.5}·Fe_{0.5}P_{y}O₄ | 230 | | | | |

The results of Table 5 show that the method of the first aspect of the invention allows preparing a broad range of electrodes having different types of electrocatalytically active materials useful for OER, such as nickel oxide, iron oxide or cobalt oxide, wherein said materials are further optionally doped with other metal salts, such as nickel, iron or zinc and optionally mixed with one or more of metal sulphides, metal sulphites, metal sulphates, metal in the active phase. Table 5 further indicates that the use of iron sulphate as salt of formula M'ₚX_{q} advantageously produces a highly active electrode for the water oxidation reaction, as indicated by the surprisingly low value of η₁₀ obtained for Fe_{0.1}^{s}·NiO (and compared for instance with Fe_{0.1}·NiO for which M'ₚX_{q} is iron(III) chloride).

### CITATION LIST

1. Chem. Rev. 2016, 116, 14493-14586.
2. Nano Energy (2013) 2, 1383-1390.
3. International patent application WO2015087168.
4. Catalysts 2019, 9, 564.
5. Electrochimica Acta 318 (2019) 809-819.
6. International journal of hydrogen energy 44 (2019) 16603-16614.
7. Adv. Mater. 2019, 1806326
8. US patent application with publication number US2020/004716

## Claims

1. A method for preparing an electrode suitable for electrocatalysis comprising an electrocatalytically active material consisting essentially of optionally doped metal oxides or a mixture thereof with one or more of metal sulphides, metal sulphites, metal sulphates, metal phosphates, metal phosphites and metal phosphides, said method comprising the steps of:
(a) providing a carrier suitable for an electrode, said carrier comprising an electron conductive material selected from the group consisting of nickel mesh, nickel foam and nickel felt;
(b) providing a precursor mixture comprising at least (i) a source of a nitrate salt of a metal M and (ii) a fuel component suitable for the solution-combustion synthesis, wherein M is selected from the group consisting of cobalt and nickel and said fuel component is selected from the group consisting of urea, glycine, citric acid, acetylacetone and ethylene glycol;
(c) transferring to the electron conductive material of the carrier of step (a) the precursor mixture of step (b) to produce an electrode precursor;
(d) heating the electrode precursor obtained in step (c) at a temperature sufficiently high to cause the transferred precursor mixture to self-ignite;
wherein the carrier of step (a) is such that the electron conductive material is stable at the temperature of step (d); the molar ratio of fuel component to nitrate anion in the precursor mixture of step (b) is such that it allows essentially for the formation of the electrocatalytically active material during the combustion step of step (d); and wherein when the electrocatalytically active material of the electrode comprises one or more of metal sulphides, metal sulphites and metal sulphates, the precursor mixture of step (b) further comprises a sulphur source and/or the fuel component of the precursor mixture comprises a sulphur atom in its molecular formula;
when the electrocatalytically active material of the electrode comprises one or more of metal phosphates, metal phosphites and metal phosphides, the precursor mixture of step (b) further comprises a phosphorus source.

2. The method according to claim 1 for preparing an electrode comprising an electrocatalytically active material consisting essentially of optionally doped metal oxides wherein the precursor mixture of step (b) comprises a fuel component that is a fuel component of formula CₗHₘOₙNₖ and wherein the number of moles of fuel component per each mole of nitrate in the precursor mixture of step (b) is comprised between 0.8 and 1.2 times the value of ϕ¹, wherein ϕ¹ is defined as the optimal number of moles of fuel component per each mole of nitrate in the precursor mixture of step (b) such that ϕ¹ satisfies equation 1 ${ϕ}^{1} = \frac{5}{4 l + m - 2 n}$ (Equation 1) wherein k is the total number of nitrogen atoms in the molecular formula of the fuel component and is an integer comprised between 0 and 5, l is the total number of carbon atoms in the molecular formula of the fuel component and is an integer comprised between 1 and 10, m is the total number of hydrogen atoms in the molecular formula of the fuel component and is an integer comprised between 4 and 50, and n is the total number of oxygen atoms in the molecular formula of the fuel component and is an integer comprised between 0 and 5.

3. The method according to claim 2 wherein the number of moles of fuel component per each mole of nitrate in the precursor mixture of step (b) is equal to the value of ϕ¹.

4. The method according to any one of claims 1 to 3, wherein the precursor mixture of step (b) further comprises a salt of formula M'ₚX_{q} or a solvate thereof, wherein:
M' is a metal cation other than M selected from the group consisting of lithium(I), sodium(I), potassium(I), nickel(II), iron(II), iron(III), cobalt(II), manganese(II), copper(II), zinc(II), palladium(II), chromium (III), vanadium(III), molybdenum(III), aluminium(III) and platinum(II) and mixtures thereof;
X is an anion selected from the group consisting of chloride, bromide, iodide, acetate, formate, acetylacetonate, nitrate, phosphate, acetylacetonate, trifluoromethanesulfonate, sulphate, oxalate, carbonate, hydrogencarbonate, perchlorate, hydroxide and sulfamate; such that when X is hydroxide the precursor mixture optionally further comprises an acid in an amount comprised between half and twice the amount of hydroxide anions; and p and q are each an integer selected from 1, 2 and 3 such that the sum of positive charges on M'ₚ is equal to the sum of negative charges on X_{q}.

5. The method according to any one of claims 1 to 4 wherein, during step (c), the precursor mixture of step (b) is transferred to the electron conductive material of the carrier of step (a) by a method selected from the group consisting of dip-coating, soaking, spray-coating, inkjet printing, spin coating, chemical bath deposition and immersion and/or, during step (d), the electrode precursor of step (c) is heated at a temperature of at least 180 °C; preferably of between 200 °C and 400 °C.

6. The method according to any one of claims 1 to 5 wherein the electrocatalytically active material of the electrode consists essentially of optionally doped metal oxides.

7. The method according to any one of claims 1 to 6 wherein the electrocatalytically active material of the electrode comprises one or more crystalline or semi-crystalline solid phases.

8. The method according to claim 7 wherein:
the electrocatalytically active material of the electrode consists essentially of optionally doped metal oxides;
the electron conductive material of the carrier of step (a) is nickel foam;
the precursor mixture of step (b) is an aqueous solution comprising nickel(II) nitrate or a solvate thereof as nitrate salt of a metal M and ethylene glycol as fuel component, wherein the molar ratio of fuel component to nitrate anion in the mixture of step (b) is about 1 mole of fuel component per every 2 moles of nitrate anion;
the precursor mixture of step (b) optionally further comprises a salt of formula M'ₚX_{q} or a solvate thereof selected from the group consisting of iron(III) chloride, iron(III) nitrate, iron(III) sulphate, iron (III) acetylacetonate, nickel(II) nitrate, manganese(II) chloride, manganese(II) nitrate, zinc(II) chloride, zinc(II) nitrate, zinc sulphate, zinc acetylacetonate, cobalt(II) chloride, cobalt (II) nitrate and solvates thereof, wherein the molar ratio of nickel(II) nitrate or the solvate thereof to the salt of formula M'ₚX_{q} is comprised of from 10:1 to 1:1; and
the temperature of step (d) is of at least 180 °C.

9. An electrode comprising a carrier and an electrocatalytically active material consisting essentially of optionally doped metal oxides or a mixture thereof with one or more of metal sulphides, metal sulphites, metal sulphates, metal phosphates, metal phosphites and metal phosphides obtained by the method of any of the claims 1 to 8 wherein the electrocatalytically active material is attached onto the electrode carrier with no need for a binder.

10. A device, such as a fuel cell or an electrolyser or a battery, which comprises one or more electrodes according to claim 9.

11. Use of the electrode according to claim 9 in electrocatalytic oxidation methods; preferably in water oxidation.

## Patentansprüche

1. Ein Verfahren zur Herstellung einer für die Elektrokatalyse geeigneten Elektrode, die ein elektrokatalytisch aktives Material umfasst, das im Wesentlichen aus optional dotierten Metalloxiden oder einer Mischung davon mit einem oder mehreren der folgenden Stoffe besteht: Metallsulfide, Metallsulfite, Metallsulfate, Metallphosphate, Metallphosphite und Metallphosphide, wobei das Verfahren die folgenden Schritte umfasst:
(a) Bereitstellen eines für eine Elektrode geeigneten Trägers, wobei der Träger ein elektronenleitendes Material umfasst, das aus der Gruppe ausgewählt ist, die aus Nickelgitter, Nickelschaum und Nickelfilz besteht;
(b) Bereitstellen einer Vorläufermischung, die mindestens (i) eine Quelle für ein Nitratsalz eines Metalls M und (ii) eine für die Lösungsverbrennungssynthese geeignete Brennstoffkomponente umfasst, wobei M aus der Gruppe ausgewählt ist, bestehend aus Kobalt und Nickel, und die Brennstoffkomponente aus der Gruppe ausgewählt ist, bestehend aus Harnstoff, Glycin, Zitronensäure, Acetylaceton und Ethylenglykol;
(c) Übertragen der Vorläufermischung aus Schritt (b) auf das elektronenleitende Material des Trägers aus Schritt (a), um einen Elektrodenvorläufer herzustellen;
(d) Erhitzen des in Schritt (c) erhaltenen Elektrodenvorläufers auf eine Temperatur, die hoch genug ist, um eine Selbstentzündung der übertragenen Vorläufermischung zu bewirken;
wobei der Träger aus Schritt (a) so beschaffen ist, dass das elektronenleitende Material bei der Temperatur von Schritt (d) stabil ist; das Molverhältnis von Brennstoffkomponente zu Nitratanion in der Vorläufermischung aus Schritt (b) so bemessen ist, dass es im Wesentlichen die Bildung des elektrokatalytisch aktiven Materials während des Verbrennungsschritts von Schritt (d) ermöglicht; und wobei wenn das elektrokatalytisch aktive Material der Elektrode eines oder mehrere der folgenden Materialien umfasst: Metallsulfide, Metallsulfite und Metallsulfate, die Vorläufermischung aus Schritt (b) ferner eine Schwefelquelle umfasst und/oder die Brennstoffkomponente der Vorläufermischung ein Schwefelatom in ihrer Molekülformel enthält;
wenn das elektrokatalytisch aktive Material der Elektrode eines oder mehrere der folgenden enthält: Metallphosphate, Metallphosphite und Metallphosphide, umfasst die Vorläufermischung aus Schritt (b) ferner eine Phosphorquelle.

2. Das Verfahren nach Anspruch 1 zur Herstellung einer Elektrode, die ein elektrokatalytisch aktives Material umfasst, das im Wesentlichen aus optional dotierten Metalloxiden besteht, wobei die Vorläufermischung aus Schritt (b) eine Brennstoffkomponente umfasst, die eine Brennstoffkomponente der Formel C_{I}HₘOₙNₖ ist und wobei die Molzahl der Brennstoffkomponente pro Mol Nitrat in der Vorläufermischung aus Schritt (b) zwischen dem 0,8- und 1,2-fachen des Wertes von ϕ¹ liegt, wobei ϕ¹ als die optimale Molzahl der Brennstoffkomponente pro Mol Nitrat in der Vorläufermischung aus Schritt (b) definiert ist, so das ϕ¹ die Gleichung 1 erfüllt ${ϕ}^{1} = \frac{5}{4 l + m - 2 n}$ (Gleichung 1) wobei k die Gesamtzahl der Stickstoffatome in der Molekülformel der Brennstoffkomponente ist und eine ganze Zahl zwischen 0 und 5 darstellt, l die Gesamtzahl der Kohlenstoffatome in der Molekülformel der Brennstoffkomponente ist und eine ganze Zahl zwischen 1 und 10 darstellt, m die Gesamtzahl der Wasserstoffatome in der Molekülformel der Brennstoffkomponente ist und eine ganze Zahl zwischen 4 und 50 darstellt, und n die Gesamtzahl der Sauerstoffatome in der Molekülformel der Brennstoffkomponente ist und eine ganze Zahl zwischen 0 und 5 darstellt.

3. Das Verfahren nach Anspruch 2, wobei die Molzahl der Brennstoffkomponente pro Mol Nitrat in der Vorläufermischung aus Schritt (b) dem Wert von ϕ¹ entspricht.

4. Das Verfahren nach einem der Ansprüche 1 bis 3, wobei die Vorläufermischung aus Schritt (b) ferner ein Salz der Formel M'ₚX_{q}oder ein Solvat davon umfasst, wobei:
M' ein von M verschiedenes Metallkation ist, ausgewählt aus der Gruppe bestehend aus Lithium(I), Natrium(I), Kalium(I), Nickel(II), Eisen(II), Eisen(III), Kobalt(II), Mangan(II), Kupfer(II), Zink(II), Palladium(II), Chrom(III), Vanadium(III), Molybdän(III), Aluminium(III) und Platin(II) sowie Mischungen davon;
X ein Anion ist, ausgewählt aus der Gruppe bestehend aus Chlorid, Bromid, Iodid, Acetat, Formiat, Acetylacetonat, Nitrat, Phosphat, Acetylacetonat, Trifluormethansulfonat, Sulfat, Oxalat, Carbonat, Hydrogencarbonat, Perchlorat, Hydroxid und Sulfamat; wobei, wenn X Hydroxid ist, die Vorläufermischung optional zusätzlich eine Säure in einer Menge enthält, die zwischen der Hälfte und dem Doppelten der Menge an Hydroxid-Anionen liegt; und p und q jeweils eine ganze Zahl sind, ausgewählt aus 1, 2 und 3, sodass die Summe der positiven Ladungen an M'ₚ gleich der Summe der negativen Ladungen an X_{q} ist.

5. Das Verfahren nach einem der Ansprüche 1 bis 4, wobei während Schritt (c) die Vorläufermischung aus Schritt (b) auf das elektronenleitende Material des Trägers aus Schritt (a) durch ein Verfahren übertragen wird, das aus der Gruppe ausgewählt ist, die aus Tauchbeschichtung, Einweichen, Sprühbeschichtung, Tintenstrahldruck, Spin-Coating, chemischer Badabscheidung und Eintauchen besteht, und/oder während Schritt (d) der Elektrodenvorläufer aus Schritt (c) auf eine Temperatur von mindestens 180 °C erhitzt wird; vorzugsweise zwischen 200 °C und 400 °C.

6. Das Verfahren nach einem der Ansprüche 1 bis 5, wobei das elektrokatalytisch aktive Material der Elektrode im Wesentlichen aus optional dotierten Metalloxiden besteht.

7. Das Verfahren nach einem der Ansprüche 1 bis 6, wobei das elektrokatalytisch aktive Material der Elektrode eine oder mehrere kristalline oder teilkristalline feste Phasen umfasst.

8. Das Verfahren nach Anspruch 7, wobei:
das elektrokatalytisch aktive Material der Elektrode im Wesentlichen aus optional dotierten Metalloxiden besteht;
das elektronenleitende Material des Trägers aus Schritt (a) Nickelschaum ist;
das Ausgangsmischungsgemisch aus Schritt (b) ist eine wässrige Lösung, die Nickel(II)-nitrat oder ein Solvat davon als Nitratsalz eines Metalls M und Ethylenglykol als Brennstoffkomponente enthält, wobei das Molverhältnis von Brennstoffkomponente zu Nitratanion in dem Gemisch aus Schritt (b) etwa 1 Mol Brennstoffkomponente pro 2 Mol Nitratanion beträgt;
die Vorläufermischung aus Schritt (b) umfasst optional ferner ein Salz der Formel M'ₚX_{q} oder eines Solvats davon, ausgewählt aus der Gruppe bestehend aus Eisen(III)-chlorid, Eisen(III)-nitrat, Eisen(III)-sulfat, Eisen(III)-acetylacetonat, Nickel(II)-nitrat, Mangan(II)-chlorid, Mangan(II)-nitrat, Zink(II)-chlorid, Zink(II)-nitrat, Zinksulfat, Zinkacetylacetonat, Kobalt(II)-chlorid, Kobalt(II)-nitrat und deren Solvate, wobei das Molverhältnis von Nickel(II)-nitrat oder dessen Solvat zu dem Salz der Formel M'ₚX_{q} zwischen 10:1 und 1:1 liegt; und
die Temperatur in Schritt (d) mindestens 180 °C beträgt.

9. Eine Elektrode, umfassend einen Träger und ein elektrokatalytisch aktives Material, das im Wesentlichen aus optional dotierten Metalloxiden oder einer Mischung davon mit einem oder mehreren der folgenden Stoffe besteht: Metallsulfide, Metallsulfite, Metallsulfate, Metallphosphate, Metallphosphite und Metallphosphide, erhalten durch das Verfahren gemäß einem der Ansprüche 1 bis 8, wobei das elektrokatalytisch aktive Material ohne Verwendung eines Bindemittels auf dem Elektrodenträger aufgebracht ist.

10. Eine Vorrichtung, wie eine Brennstoffzelle, ein Elektrolyseur oder eine Batterie, die eine oder mehrere Elektroden gemäß Anspruch 9 umfasst.

11. Eine Verwendung der Elektrode nach Anspruch 9 in elektrokatalytischen Oxidationsverfahren; vorzugsweise bei der Wasseroxidation.

## Revendications

1. Un procédé de préparation d'une électrode appropriée pour l'électrocatalyse comprenant un matériau électrocatalytiquement actif constitué essentiellement d'oxydes métalliques éventuellement dopés ou d'un mélange de ceux-ci avec un ou plusieurs sulfures métalliques, sulfites métalliques, sulfates métalliques, phosphates métalliques, phosphites métalliques et phosphures métalliques, ledit procédé comprenant les étapes suivantes :
(a) fournir un support approprié pour une électrode, ledit support comprenant un matériau conducteur d'électrons choisi dans le groupe constitué de treillis de nickel, de mousse de nickel et de feutre de nickel ;
(b) fournir un mélange précurseur comprenant au moins (i) une source d'un sel de nitrate d'un métal M et (ii) un composant combustible approprié pour la synthèse par combustion en solution, où M est choisi dans le groupe constitué de cobalt et de nickel et ledit composant combustible est choisi dans le groupe constitué d'urée, de glycine, d'acide citrique, d'acétylacétone et d'éthylène glycol ;
(c) transférer sur le matériau conducteur d'électrons du support de l'étape (a) le mélange précurseur de l'étape (b) pour produire un précurseur d'électrode ;
(d) chauffer le précurseur d'électrode obtenu à l'étape (c) à une température suffisamment élevée pour provoquer l'auto-inflammation du mélange précurseur transféré ;
dans lequel le support de l'étape (a) est tel que le matériau conducteur d'électrons est stable à la température de l'étape (d) ; le rapport molaire du composant combustible à l'anion nitrate dans le mélange précurseur de l'étape (b) est tel qu'il permet essentiellement la formation du matériau électrocatalytiquement actif pendant l'étape de combustion de l'étape (d) ; et dans lequel lorsque le matériau électrocatalytiquement actif de l'électrode comprend un ou plusieurs sulfures métalliques, sulfites métalliques et sulfates métalliques, le mélange précurseur de l'étape (b) comprend en outre une source de soufre et/ou le composant combustible du mélange précurseur comprend un atome de soufre dans sa formule moléculaire ;
lorsque le matériau électrocatalytiquement actif de l'électrode comprend un ou plusieurs phosphates métalliques, phosphites métalliques et phosphures métalliques, le mélange précurseur de l'étape (b) comprend en outre une source de phosphore.

2. Le procédé selon la revendication 1 pour préparer une électrode comprenant un matériau électrocatalytiquement actif constitué essentiellement d'oxydes métalliques éventuellement dopés dans lequel le mélange précurseur de l'étape (b) comprend un composant combustible qui est un composant combustible de formule CₗHₘOₙNₖ et dans lequel le nombre de moles de composant combustible pour chaque mole de nitrate dans le mélange précurseur de l'étape (b) est compris entre 0,8 et 1,2 fois la valeur de Φ¹, où Φ¹ est défini comme le nombre optimal de moles de composant combustible pour chaque mole de nitrate dans le mélange précurseur de l'étape (b) tel que Φ¹ satisfait l'équation 1 ${Φ}^{1} = \frac{5}{4 l + m - 2 n}$ (Équation 1) où k est le nombre total d'atomes d'azote dans la formule moléculaire du composant combustible et est un entier compris entre 0 et 5, l est le nombre total d'atomes de carbone dans la formule moléculaire du composant combustible et est un entier compris entre 1 et 10, m est le nombre total d'atomes d'hydrogène dans la formule moléculaire du composant combustible et est un entier compris entre 4 et 50, et n est le nombre total d'atomes d'oxygène dans la formule moléculaire du composant combustible et est un entier compris entre 0 et 5.

3. Le procédé selon la revendication 2 dans lequel le nombre de moles de composant combustible pour chaque mole de nitrate dans le mélange précurseur de l'étape (b) est égal à la valeur de Φ¹.

4. Le procédé selon l'une quelconque des revendications 1 à 3, dans lequel le mélange précurseur de l'étape (b) comprend en outre un sel de formule M'ₚX_{q} ou un solvate de celui-ci, où : M' est un cation métallique autre que M choisi dans le groupe constitué de lithium(I), sodium(I), potassium(I), nickel(II), fer(II), fer(III), cobalt(II), manganèse(II), cuivre(II), zinc(II), palladium(II), chrome(III), vanadium(III), molybdène(III), aluminium(III) et platine(II) et des mélanges de ceux-ci ;
X est un anion choisi dans le groupe constitué de chlorure, bromure, iodure, acétate, formiate, acétylacétonate, nitrate, phosphate, acétylacétonate, trifluorométhanesulfonate, sulfate, oxalate, carbonate, hydrogénocarbonate, perchlorate, hydroxyde et sulfamate ; de sorte que lorsque X est hydroxyde, le mélange précurseur comprend éventuellement en outre un acide en une quantité comprise entre la moitié et le double de la quantité d'anions hydroxyde ; et p et q sont chacun un entier choisi parmi 1, 2 et 3 de sorte que la somme des charges positives sur M'ₚ est égale à la somme des charges négatives sur X_{q}.

5. Le procédé selon l'une quelconque des revendications 1 à 4 dans lequel, pendant l'étape (c), le mélange précurseur de l'étape (b) est transféré sur le matériau conducteur d'électrons du support de l'étape (a) par une méthode choisie dans le groupe constitué de revêtement par immersion, trempage, revêtement par pulvérisation, impression à jet d'encre, enduction centrifuge, dépôt en bain chimique et immersion et/ou, pendant l'étape (d), le précurseur d'électrode de l'étape (c) est chauffé à une température d'au moins 180 °C, de préférence entre 200 °C et 400 °C.

6. Le procédé selon l'une quelconque des revendications 1 à 5 dans lequel le matériau électrocatalytiquement actif de l'électrode est constitué essentiellement d'oxydes métalliques éventuellement dopés.

7. Le procédé selon l'une quelconque des revendications 1 à 6 dans lequel le matériau électrocatalytiquement actif de l'électrode comprend une ou plusieurs phases solides cristallines ou semi-cristallines.

8. Le procédé selon la revendication 7 dans lequel :
le matériau électrocatalytiquement actif de l'électrode est constitué essentiellement d'oxydes métalliques éventuellement dopés ;
le matériau conducteur d'électrons du support de l'étape (a) est de la mousse de nickel ;
le mélange précurseur de l'étape (b) est une solution aqueuse comprenant du nitrate de nickel(II) ou un solvate de celui-ci comme sel de nitrate d'un métal M et de l'éthylène glycol comme composant combustible, où le rapport molaire du composant combustible à l'anion nitrate dans le mélange de l'étape (b) est d'environ 1 mole de composant combustible pour chaque 2 moles d'anion nitrate ; le mélange précurseur de l'étape (b) comprend éventuellement en outre un sel de formule M'ₚX_{q} ou un solvate de celui-ci choisi dans le groupe constitué de chlorure de fer(III), nitrate de fer(III), sulfate de fer(III), acétylacétonate de fer(III), nitrate de nickel(II), chlorure de manganèse(II), nitrate de manganèse(II), chlorure de zinc(II), nitrate de zinc(II), sulfate de zinc, acétylacétonate de zinc, chlorure de cobalt(II), nitrate de cobalt(II) et des solvates de ceux-ci, où le rapport molaire du nitrate de nickel(II) ou du solvate de celui-ci au sel de formule M'ₚX_{q} est compris entre 10:1 et 1:1 ; et
la température de l'étape (d) est d'au moins 180 °C.

9. Électrode comprenant un support et un matériau électrocatalytiquement actif constitué essentiellement d'oxydes métalliques éventuellement dopés ou d'un mélange de ceux-ci avec un ou plusieurs sulfures métalliques, sulfites métalliques, sulfates métalliques, phosphates métalliques, phosphites métalliques et phosphures métalliques obtenue par le procédé de l'une quelconque des revendications 1 à 8 dans laquelle le matériau électrocatalytiquement actif est fixé sur le support d'électrode sans nécessité d'un liant.

10. Dispositif, tel qu'une pile à combustible ou un électrolyseur ou une batterie, qui comprend une ou plusieurs électrodes selon la revendication 9.

11. Utilisation de l'électrode selon la revendication 9 dans des procédés d'oxydation électrocatalytique ; de préférence dans l'oxydation de l'eau.
